# EUROPEAN PATENT APPLICATION

(11) **EP 4 797 202 A1**
(43) Date of publication of application: **26.08.2026**
(21) Application number: 26159133.3
(22) Date of filing: 17.02.2026
(51) Int. Cl.: G06T 7/00

(54) **NON-DISRUPTIVE AND SHAPE-UNCONSTRAINED LEAK DETECTION IN LIQUID CHROMATOGRAPHY**

(30) Priority: 21.02.2025 US 202519059677
(71) Applicant: THERMO FINNIGAN LLC, San Jose CA 95134 (US)
(72) Inventor: SILVEIRA, Joshua Adam, San Jose, 95134 (US); WOUTERS, Eloy Rogier, San Jose, 95134 (US); AMARASINGHE, Chandika, San Jose, 95134 (US); KEARNEY, Katherine, San Jose, 95134 (US)
(74) Representative: Boult Wade Tennant LLP

(57) **Abstract**

Systems/techniques are provided for facilitating non-disruptive and shape-unconstrained leak detection in liquid chromatography. In various embodiments, a system can capture, via at least one camera, at least one timeseries of images depicting an electrospray emitter of a chromatograph. In various aspects, the system, can determine a leak rate afflicting the chromatograph based on: executing a droplet-volume-prediction neural network on respective images of the at least one timeseries of images; executing a droplet-pixel-prediction neural network on respective images of the at least one timeseries of images; or executing a leak-rate-prediction neural network on an entirety of the at least one timeseries of images.

## Description

### BACKGROUND

Detecting leaks in a liquid chromatography system can be difficult.

### SUMMARY

The following presents a summary to provide a basic understanding of one or more embodiments. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate non-disruptive and shape-unconstrained leak detection in liquid chromatography are described.

According to one or more embodiments, a system is provided. In various aspects, the system can comprise a processor that can execute computer-executable components stored in a non-transitory computer-readable memory. In various instances, the computer-executable components can comprise an image component that can capture, via at least one camera, at least one timeseries of images depicting an electrospray emitter of a chromatograph. In various cases, the computer-executable components can comprise a volume component that can execute a deep learning neural network on respective images of the at least one timeseries of images, wherein respective outputs of the deep learning neural network form a timeseries of volumes of a droplet that is depicted in the at least one timeseries of images as forming on the electrospray emitter. In various aspects, the computer-executable components can comprise a leak component that can determine a leak rate afflicting the chromatograph, based on the timeseries of volumes.

According to one or more embodiments, a computer-implemented method is provided. In various embodiments, the computer-implemented method can comprise capturing, by a device operatively coupled to a processor and via at least one camera, at least one timeseries of images depicting an electrospray emitter of a chromatograph. In various aspects, the computer-implemented method can comprise executing, by the device, a deep learning neural network on respective images of the at least one timeseries of images, wherein respective outputs of the deep learning neural network form a timeseries of pixel counts occupied by a droplet that is depicted in the at least one timeseries of images as forming on the electrospray emitter. In various instances, the computer-implemented method can comprise determining, by the device, a leak rate afflicting the chromatograph, based on the timeseries of pixel counts.

According to one or more embodiments, a computer program product for facilitating non-disruptive and shape-unconstrained leak detection in liquid chromatography is provided. In various embodiments, the computer program product can comprise a non-transitory computer-readable memory having program instructions embodied therewith. In various aspects, the program instructions can be executable by a processor to cause the processor to capture, via at least one camera, at least one timeseries of images depicting an electrospray emitter of a chromatograph. In various instances, the program instructions can be executable by the processor to cause the processor to determine a leak rate afflicting the chromatograph, based on executing a deep learning neural network on the at least one timeseries of images, wherein the at least one timeseries of images is fed as input to the deep learning neural network, wherein the at least one timeseries of images completes a forward pass through the deep learning neural network, and wherein the deep learning neural network produces as output the leak rate.

### DESCRIPTION OF THE DRAWINGS

Various embodiments will be readily understood by the following detailed description in conjunction with the accompanying figures. To facilitate this description, like reference numerals designate like structural elements. Embodiments are illustrated by way of example, not by way of limitation, in the figures. The figures are not necessarily drawn to scale.
FIG. 1 illustrates an example, non-limiting block diagram of a scientific instrument module in accordance with various embodiments described herein.
FIG. 2 illustrates an example, non-limiting flow diagram of a computer-implemented method in accordance with various embodiments described herein.
FIG. 3 illustrates a block diagram of an example, non-limiting system that facilitates non-disruptive and shape-unconstrained leak detection in liquid chromatography in accordance with one or more embodiments described herein.
FIG. 4 illustrates a block diagram of an example, non-limiting system including a set of droplet image timeseries that facilitates non-disruptive and shape-unconstrained leak detection in liquid chromatography in accordance with one or more embodiments described herein.
FIG. 5 illustrates an example, non-limiting block diagram showing how a set of droplet image timeseries can be obtained in accordance with one or more embodiments described herein.
FIG. 6 illustrates a block diagram of an example, non-limiting system including a droplet volume timeseries that facilitates non-disruptive and shape-unconstrained leak detection in liquid chromatography in accordance with one or more embodiments described herein.
FIGs. 7-10 illustrate example, non-limiting block diagrams showing how a droplet volume timeseries can be obtained in accordance with one or more embodiments described herein.
FIG. 11 illustrates a block diagram of an example, non-limiting system including a leak rate that facilitates non-disruptive and shape-unconstrained leak detection in liquid chromatography in accordance with one or more embodiments described herein.
FIGs. 12-13 illustrate example, non-limiting block diagrams showing how a leak rate can be obtained in accordance with one or more embodiments described herein.
FIGs. 14-17 illustrate example, non-limiting block diagrams showing how various neural networks can be trained in accordance with one or more embodiments described herein.
FIGs. 18-24 illustrate example, non-limiting experimental results in accordance with one or more embodiments described herein.
FIG. 25 illustrates a block diagram of an example, non-limiting operating environment in which one or more embodiments described herein can be facilitated.
FIG. 26 illustrates an example networking environment operable to execute various implementations described herein.

### DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Various operations can be described as multiple discrete actions or operations in turn, in a manner that is most helpful in understanding the subject matter disclosed herein. However, the order of description should not be construed as to imply that these operations are necessarily order dependent. In particular, these operations can be performed in an order different from the order of presentation. Operations described can be performed in a different order from the described embodiments. Various additional operations can be performed, or described operations can be omitted in additional embodiments.

Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices. As used herein, the phrase "based on" should be understood to mean "based at least in part on," unless otherwise specified.

A mass spectrometer coupled to a chromatograph can be considered as a type of scientific instrument that can be deployed in a scientific, laboratory, research, or clinical operational context or setting, so as to determine the chemical composition or make-up of unknown samples or specimens. To facilitate such chemical composition determination, the mass spectrometer or chromatograph can comprise a complex arrangement of actuatable parts (e.g., ion sources, ion lenses, heaters, coolers, columns, ovens, injectors, mass analyzers, fluid valves, fluid pumps, circuit switches), sensors (e.g., ion detectors, voltmeters, thermistors, potentiometers, pressure gauges), or consumables (e.g., carrier fluids, calibrants, filters).

During a scan, a portion of any given sample can be injected into the chromatograph and thus pass through whatever constituent pieces of hardware (e.g., oven-heated column) that make up the chromatograph. The chromatograph can be structured or designed so as to cause different chemical species (e.g., molecules, compounds, analytes) within the injected portion of the sample to elute (e.g., to be physically separated or isolated from the remainder of the injected portion of the sample) at different times. How much time is required for any particular chemical species to elute can be referred to as a retention time of that particular chemical species. The chromatograph can be configured to generate a chromatogram, which can be considered as a graph of intensity (e.g., magnitude of detector signal recorded by the chromatograph) as a function of retention time. As respective chemical species elute in or from the chromatograph, an end nozzle of the chromatograph can spray those species into the mass spectrometer, and those species can thus pass through whatever constituent pieces of hardware (e.g., ionizer, mass analyzer) that make up the mass spectrometer. The mass spectrometer can be structured or designed to separate (or, in some cases, to measure without physically separating) the individual ions that make up any particular chemical species according to the mass-to-charge ratios of those ions. Such separation or measurement can yield a mass spectrum for the particular chemical species, which can be considered as a graph of intensity (e.g., magnitude of detector signal recorded by the mass spectrometer) as a function of mass-to-charge ratio.

After the given sample is injected into the chromatograph, the given sample can be carried through the chromatograph's constituent pieces of hardware via a pumped or otherwise circulated mobile phase (e.g., also called a carrier fluid). In a gas chromatograph, the mobile phase can be an inert gas, such as hydrogen, helium, or nitrogen. In a liquid chromatograph, on the other hand, the mobile phase can instead be a liquid solvent or a mixture of liquid solvents, such as water, acetonitrile, methanol, ethanol, tetrahydrofuran, hexane, or isopropanol.

In order for a liquid chromatograph to function or operate properly, the mobile phase of the liquid chromatograph should exhibit less than any suitable threshold amount of leaking or leakage. In other words, the seals, gaskets, piping, tubing, conduits, pumps, valves, or other hardware that make up the liquid chromatograph should be collectively able to maintain any suitable threshold level of pressure, such that the mobile phase does not leak or drip out of such seals, gaskets, piping, tubing, conduits, pumps, valves, or other hardware at an excessive rate. Accordingly, it can be desired to periodically or regularly check or test the leak rate of the mobile phase of the liquid chromatograph, so as to determine whether or not the liquid chromatograph is functioning or operating properly.

Some existing techniques facilitate such leak checking or testing by physically plugging the pipes, tubes, or conduits of the liquid chromatograph, pressurizing the liquid chromatograph to any suitable elevated level, and measuring via a piston gauge what rate of newly-injected liquid is required to maintain that elevated level of pressure. Unfortunately, due to limitations in piston gauge technology, such existing techniques tend to be effective at measuring leak rates that are no lower than on the order of milliliters per minute (mL/min). Thus, such existing techniques are usually considered inadequate for nano-flow liquid chromatographs, where miniscule leak rates measuring on the order of microliters per minute (µL/min) to nanoliters per minute (nL/min) can critically affect chromatograph performance. Furthermore, such existing techniques are considered disruptive, because they require physical plugging of the liquid chromatograph. With current technology, such physical plugging necessitates uninstallation or removal of the oven-heated column and end nozzle of the liquid chromatograph. In other words, measuring leak rates via such existing techniques depends upon substantial physical modification of or intervention with respect to the liquid chromatograph, which can be considered as effort-intensive or time-consuming to implement and cannot be conducted while the chromatograph is in an operational state (e.g., in between sample measurements).

Other existing techniques facilitate such leak checking or testing by analyzing images that depict a droplet dripping out of the end nozzle of the liquid chromatograph. Such other existing techniques do not rely upon piston gauges and do not require physical plugging of the pipes, tubes, or conduits of the liquid chromatograph. Accordingly, such other existing techniques can be used to measure miniscule leak rates and are not disruptive to the liquid chromatograph. However, such other existing techniques can provide accurate leak detection or measurement only when whatever droplet that is depicted in the images is spherical or otherwise highly round. Indeed, such other existing techniques work by implementing various shape-constrained or geometry-centric image processing tools, such as round-edge detectors, ellipticity estimators, and radii estimators. Because of such implementation of shape-constrained or geometry-centric image processing tools, the accuracy of such other existing techniques falls precipitously as the depicted droplet becomes less spherical or less round. Unfortunately, depending upon the physical design and orientation of the end nozzle of the liquid chromatograph, the images can be likely to depict droplets that are not highly spherical or round (e.g., can often depict droplets that have pronounced teardrop-tails, or that have irregular or amorphous boundaries). So, the leak measurement accuracy of such other existing techniques can often be considered as inadequate.

That is, existing techniques for measuring leak rates of liquid chromatographs suffer from various technical problems. Accordingly, systems or techniques that can ameliorate such various technical problems can be desirable.

Various embodiments described herein can address one or more of these technical problems. One or more embodiments described herein can include systems, computer-implemented methods, apparatus, or computer program products that can facilitate non-disruptive and shape-unconstrained leak detection in liquid chromatography. In particular, various embodiments described herein can involve capturing images that depict a droplet forming on or flowing out of an end nozzle of a liquid chromatograph and determining a leak rate afflicting the liquid chromatograph by executing an artificial neural network on those images.

Some embodiments described herein can involve a first artificial neural network that is configured to receive all the images as input and to compute the leak rate as output (or can instead compute a nozzle exit rate as output, and the leak rate can be equal to a difference between that nozzle exit rate and some known fluid input rate associated with the chromatograph). Such first artificial neural network can be considered as offering a heightened degree of computational convenience (e.g., post-processing can be not required to convert the output of the first artificial neural network into the leak rate) in exchange for a reduced degree of explainability (e.g., because the inner workings of the first artificial neural network can be considered as a black box, there can be no easily interpretable computations in between the captured images and the leak rate that can be easily verified or sanity-checked).

Other embodiments described herein can involve a second artificial neural network that is configured to receive individual images as input and to compute as output the volume of whatever droplet is depicted in an individual inputted image. After a respective droplet volume is computed for each image, a temporal slope exhibited by those droplet volumes can be considered as the leak rate (or can instead be considered as a nozzle exit rate, and the leak rate can be equal to a difference between that nozzle exit rate and some known fluid input rate associated with the chromatograph). Such second artificial neural network can be considered as offering a moderate degree of computational convenience (e.g., post-processing in the form of slope computation can be required to convert the outputs of the second artificial neural network into the leak rate) in exchange for a moderate degree of explainability (e.g., even though the inner workings of the second artificial neural network can be considered as a black box, it outputs droplet volumes rather than the leak rate; so, there can be at least one interpretable computation (slope) in between the captured images and the leak rate that can be easily verified or sanity-checked).

Yet other embodiments described herein can involve a third artificial neural network that is configured to receive individual images as input and to compute as output the number of pixels (or voxels) taken up by whatever droplet is depicted in an individual inputted image. After a respective number of droplet-occupied pixels is computed for each image, those droplet-occupied pixel numbers can be converted into spatial droplet volumes using whatever spatial resolution is exhibited by or associated with the captured images, and a temporal slope exhibited by those droplet volumes can be considered as the leak rate (or can instead be considered as a nozzle exit rate, and the leak rate can be equal to a difference between that nozzle exit rate and some known fluid input rate associated with the chromatograph). Such third artificial neural network can be considered as offering a reduced degree of computational convenience (e.g., post-processing in the form of pixel-to-volume conversion and slope computation can be required to convert the outputs of the third artificial neural network into the leak rate) in exchange for a heightened degree of explainability (e.g., even though the inner workings of the third artificial neural network can be considered as a black box, it outputs droplet-occupied pixel counts rather than the leak rate; so, there can be various interpretable computations (pixel-to-space, slope) in between the captured images and the leak rate that can be easily verified or sanity-checked).

Note that, in any of such embodiments, physical plugging of the liquid chromatograph can be unnecessary or avoided. Thus, various embodiments described herein can be considered as non-disruptive. Additionally, note that none of such embodiments rely upon shape-constrained or geometry-centric image processing tools. Indeed, as described herein, the first, second, or third artificial neural networks can be trained to produce their respective outputs (e.g., the leak rate or nozzle exit rate, droplet volumes, or droplet-occupied pixel counts) based on the visually-illustrated sizes of depicted droplets, regardless of the sphericality or roundness of those depicted droplets (e.g., regardless of how pronounced the teardrop tails of those depicted droplets are, or regardless of how irregular or amorphous the boundaries of those depicted droplets are). In other words, the first, second, or third artificial neural networks described herein do not make any explicit assumptions regarding the roundness, ellipticity, radii, or other geometric characteristics of depicted droplets. Accordingly, the first, second, or third artificial neural networks described herein can function or operate properly or accurately, even for droplets that are not highly round or spherical. In this way, various embodiments described herein can be considered as being unconstrained or unrestricted by droplet shape. Thus, various embodiments described herein can be considered as an improved technique for measuring leak rates of liquid chromatographs.

Various embodiments described herein can be considered as a computerized tool (e.g., any suitable combination of computer-executable hardware or computer-executable software) that can be electronically installed on or otherwise with respect to a liquid chromatograph and that can facilitate non-disruptive and shape-unconstrained leak detection for that liquid chromatograph. In various aspects, such computerized tool can comprise an image component, a volume component, a leak component, or an execution component.

In various embodiments, the liquid chromatograph can comprise any suitable constituent hardware. As some non-limiting examples, the liquid chromatograph can comprise any suitable sample injector (e.g., injection syringe; infusion syringe; headspace autosampler; solid phase microextractor (SPME); headspace-SPME; in-tube extraction-dynamic headspace (ITEX-DHS); thermal desorber (TD); purge and trap sampler (P&T); pyrolyzer), any suitable chromatography column (e.g., made up of any suitable absorbent packing material or any suitable capillary with different stationary phase films), any suitable column oven or heater, any suitable mobile phase (e.g., water, acetonitrile, methanol, ethanol, tetrahydrofuran, hexane, isopropanol), any suitable fluid flow devices (e.g., fluid valves, fluid pumps), or any suitable end nozzle (e.g., electrospray emitter). In various aspects, the end nozzle can be configured to spray or otherwise physically deliver eluted chemical species to an inlet orifice of a mass spectrometer. In various aspects, the mass spectrometer can comprise any suitable constituent hardware. As some non-limiting examples, the mass spectrometer can comprise any suitable ion beam emitter (e.g., matrix assisted laser desorption/ionization (MALDI) source, electrospray ionization (ESI) source, atmospheric pressure chemical ionization (APCI) source, atmospheric pressure photoionization (APPI) source, inductively coupled plasma (ICP) source, electron ionization source, chemical ionization source, photoionization source, glow discharge ionization source, thermospray ionization source, combo-source), any suitable mass analyzer (e.g., quadrupole mass filter analyzer, ion trap analyzer, quadrupole ion trap analyzer, time-of-flight (TOF) analyzer, electrostatic trap (e.g., ORBITRAP) mass analyzer, Fourier transform ion cyclotron resonance (FT-ICR) mass analyzer), any suitable ion detector (e.g., electron multiplier detector, microchannel plate detector, image charge detector, Faraday cup detector), or any suitable ion optics equipment (e.g., ion focusing lenses, ion guides, ion deflectors).

In various cases, when given any sample, the sample can be injected into the liquid chromatograph, the sample can be separated into various compositional components by the liquid chromatograph, those various compositional components can be sprayed by the end nozzle into the mass spectrometer, and those various compositional components can be ionized and subsequently analyzed by the mass spectrometer (e.g., the mass spectrometer can record relative abundances of sample ions as a function of mass-to-charge ratio).

In various embodiments, there can be a set of cameras whose visual fields include or encompass the end nozzle of the liquid chromatograph. That is, the set of cameras can visually see or view the end nozzle. In various aspects, each of the set of cameras can be respectively physically oriented, such that each camera can view or see the end nozzle from a respective perspective (e.g., one camera can view or see the end nozzle from a top-view perspective; another camera can view or see the end nozzle from a side-view perspective).

In any case, a droplet can form on the tip of the end nozzle, and it can be desired to estimate a leak rate afflicting the liquid chromatograph based on the visual appearance of that droplet. As described herein, the computerized tool can facilitate such leak rate estimation, by leveraging the set of cameras.

As used herein, "leak rate" refers either to the rate of fluid flow out of the exit end (e.g., end nozzle) of the chromatograph or to the rate of unplanned fluid loss in the chromatograph between an entrance and an exit of the chromatograph. In the former case, the rate of fluid flow out of the exit end of the chromatograph can be determined directly using techniques described herein and can be a direct proxy for estimation of the unplanned fluid loss in the system. In other words, changes over time in the measured rate of fluid flow out of the exit end (e.g., electrospray emitter) of the chromatograph can, in some examples, be indicative of the introduction of undesired leaks in the system upstream of the exit end. In examples where "leak rate" instead refers to the rate of unplanned fluid loss, the measured rate of fluid flow out of the exit end of the chromatograph can be compared (e.g., by using a leak component as described below) to a known value of flow rate for liquid entering the chromatograph to determine the rate of unplanned fluid loss. For example, a readback on a pump that is pushing fluid into the chromatograph can provide the known value of flow rate for liquid entering the chromatograph. The difference between the measured or inferred rate of fluid flow out of the exit end of the chromatograph and the known value of flow rate for liquid entering the chromatograph can equal the value of the rate of unplanned fluid loss.

In various embodiments, the computerized tool can electronically access the liquid chromatograph, the mass spectrometer, or the set of cameras. That is, the computerized tool can electronically interface or communicate with the liquid chromatograph, the mass spectrometer, or the set of cameras, such that any components of the computerized tool can electronically interact with (e.g., send electronic commands to, read electronic signals from) the liquid chromatograph, the mass spectrometer, or the set of cameras.

In various embodiments, the image component of the computerized tool can electronically cause the set of cameras to capture a set of image timeseries. In various aspects, each image timeseries can be considered as a sequence of images or frames that depicts the droplet from the visual perspective of a respective camera across a defined number of timesteps. As a non-limiting example, suppose that there are *n* cameras and *t* timesteps, for any suitable positive integers *n* and *t.* In such case, there can be a total of *n* image timeseries, each being a sequence of *t* images that illustrate or depict the droplet from the view of a respective one of the *n* cameras. In other words, the droplet can form on the tip of the end nozzle, and each of the set of image timeseries can be considered as showing how the droplet, when viewed from a respective spatial perspective, visually changes over ttimesteps (e.g., a top-view camera can capture an image timeseries that shows how the top-view of the droplet changes over *t* timesteps; a side-view camera can capture an image timeseries that shows how the side-view of the droplet changes over ttimesteps).

In various embodiments, the volume component of the computerized tool can electronically generate a volume timeseries, based on the set of image timeseries. In various aspects, the volume timeseries can be a sequence of volumes, each being a scalar that represents how much spatial volume is occupied or taken up by the droplet at a respective timestep.

In some aspects, the volume component can generate the volume timeseries by leveraging a droplet-volume-prediction neural network. Specifically, the volume component can electronically store, maintain, control, or otherwise access the droplet-volume-prediction neural network. In various aspects, the droplet-volume-prediction neural network can exhibit any suitable deep learning internal architecture. For example, the droplet-volume-prediction neural network can include any suitable numbers of any suitable types of layers (e.g., input layer, one or more hidden layers, output layer, any of which can be convolutional layers, dense layers, long short-term memory (LSTM) layers, transformer layers, non-linearity layers, pooling layers, batch normalization layers, or padding layers). As another example, the droplet-volume-prediction neural network can include any suitable numbers of neurons in various layers (e.g., different layers can have the same or different numbers of neurons as each other). As yet another example, the droplet-volume-prediction neural network can include any suitable activation functions (e.g., softmax, sigmoid, hyperbolic tangent, rectified linear unit) in various neurons (e.g., different neurons can have the same or different activation functions as each other). As still another example, the droplet-volume-prediction neural network can include any suitable interneuron connections or interlayer connections (e.g., forward connections, skip connections, recurrent connections).

Regardless of its specific internal architecture, the droplet-volume-prediction neural network can be considered as a type of regressor that can compute volumes occupied by droplets that are depicted in inputted images. That is, the droplet-volume-prediction neural network can be configured to receive as input any given image of a certain droplet and to produce as output a scalar indicating how much spatial volume that certain droplet appears to occupy.

Accordingly, in various embodiments, the volume component can execute the droplet-volume-prediction neural network on respective images from the set of image timeseries, and such executions can yield the volume timeseries. As a non-limiting example, the volume component can select all images from the set of image timeseries that show the droplet at a beginning or initial timestep, the volume component can concatenate those selected images together, and the volume component can feed such concatenated images to an input layer of the droplet-volume-prediction neural network. Accordingly, those concatenated images can complete a forward pass through one or more hidden layers of the droplet-volume-prediction neural network, and an output layer of the droplet-volume-prediction neural network can compute a scalar whose value or magnitude represents or indicates how much space (e.g., measured in nL, µL, or mL) the droplet visually appears to be occupying at the beginning or initial timestep. As another non-limiting example, the volume component can select all images from the set of image timeseries that show the droplet at a final or last timestep, the volume component can concatenate those selected images together and can feed such concatenated images to the input layer of the droplet-volume-prediction neural network. Just as above, those concatenated images can complete a forward pass through the one or more hidden layers of the droplet-volume-prediction neural network, and the output layer of the droplet-volume-prediction neural network can compute a scalar whose value or magnitude represents or indicates how much space the droplet visually appears to be occupying at the final or last timestep. In this way, the volume component can leverage the droplet-volume-prediction neural network so as to compute a respective volume-indicating scalar for each timestep, and those volume-indicating scalars can collectively be considered as the volume timeseries.

In other aspects, rather than by utilizing the droplet-volume-prediction neural network, the volume component can instead generate the volume timeseries by leveraging a droplet-pixel-prediction neural network. Specifically, the volume component can electronically store, maintain, control, or otherwise access the droplet-pixel-prediction neural network. In various aspects, the droplet-pixel-prediction neural network can exhibit any suitable deep learning internal architecture. For example, the droplet-pixel-prediction neural network can include any suitable numbers of any suitable types of layers (e.g., input layer, one or more hidden layers, output layer, any of which can be convolutional layers, dense layers, LSTM layers, transformer layers, non-linearity layers, pooling layers, batch normalization layers, or padding layers). As another example, the droplet-pixel-prediction neural network can include any suitable numbers of neurons in various layers (e.g., different layers can have the same or different numbers of neurons as each other). As yet another example, the droplet-pixel-prediction neural network can include any suitable activation functions (e.g., softmax, sigmoid, hyperbolic tangent, rectified linear unit) in various neurons (e.g., different neurons can have the same or different activation functions as each other). As still another example, the droplet-pixel-prediction neural network can include any suitable interneuron connections or interlayer connections (e.g., forward connections, skip connections, recurrent connections).

Regardless of its specific internal architecture, the droplet-pixel-prediction neural network can be considered as a type of regressor that can count how many pixels (or voxels) are occupied by droplets that are depicted in inputted images. That is, the droplet-pixel-prediction neural network can be configured to receive as input any given image of a droplet and to produce as output a scalar indicating the number of pixels that appear to make up or constitute that droplet.

Accordingly, in various embodiments, the volume component can execute the droplet-pixel-prediction neural network on respective images from the set of image timeseries, and such executions can yield a pixel count timeseries. In various aspects, the pixel count timeseries can be a sequence of pixel counts, each being a scalar that represents how many pixels (e.g., expressed in units of "cubic pixels" or "pixels cubed") are occupied or taken up by the droplet at a respective timestep. As a non-limiting example, the volume component can select all images from the set of image timeseries that show the droplet at the beginning or initial timestep, the volume component can concatenate those selected images together, and the volume component can feed such concatenated images to an input layer of the droplet-pixel-prediction neural network. Accordingly, those concatenated images can complete a forward pass through one or more hidden layers of the droplet-pixel-prediction neural network, and an output layer of the droplet-pixel-prediction neural network can compute a scalar whose value or magnitude represents or indicates how many pixels the droplet visually appears to be occupying at the beginning or initial timestep. As another non-limiting example, the volume component can select all images from the set of image timeseries that show the droplet at the final or last timestep, the volume component can concatenate those selected images together, and the volume component can feed such concatenated images to the input layer of the droplet-pixel-prediction neural network. Just as above, those concatenated images can complete a forward pass through the one or more hidden layers of the droplet-pixel-prediction neural network, and the output layer of the droplet-pixel-prediction neural network can compute a scalar whose value or magnitude represents or indicates how many pixels the droplet visually appears to be occupying at the final or last timestep. In this way, the volume component can leverage the droplet-pixel-prediction neural network so as to compute a respective pixel-count-indicating scalar for each timestep, and those pixel-count-indicating scalars can collectively be considered as the pixel count timeseries.

In various cases, the volume component can convert the pixel count timeseries into the volume timeseries, based on a pixel-to-volume conversion factor. In various aspects, the pixel-to-volume conversion factor can be a ratio expressed in units of volume (e.g., mL, µL, nL) per cubic pixel. In some instances, the pixel-to-volume conversion factor can be based on a spatial resolution associated with the set of cameras or otherwise exhibited by the set of image timeseries. As a non-limiting example, the spatial resolution of the set of cameras or of the set of image timeseries can be a scalar indicating how much linear distance is spanned by a single pixel, and so the pixel-to-volume conversion factor can be equal to the cube of the spatial resolution. In various cases, the spatial resolution can be obtained or identified in any suitable fashion (e.g., by determining how many pixels a camera requires to represent a known physical distance or displacement).

In any case, the volume component can generate the volume timeseries based on the set of image timeseries.

In various embodiments, the leak component of the computerized tool can electronically determine a leak rate afflicting the liquid chromatograph, based on the volume timeseries. In particular, the volume timeseries can be considered as indicating how the volume of the droplet that is forming on the tip of the end nozzle changes over the course of *t* timesteps. Accordingly, in some aspects, the leak component can compute an average slope exhibited by the volume of the droplet over those *t* timesteps (e.g., the slope can be expressed in units of volume per time), and the leak rate can be equal to or otherwise based on that average slope (e.g., can be equal to a difference between that average slope and a known rate of fluid flow that is being pumped into the chromatograph).

In some embodiments, the volume component can be omitted, and the leak component can instead generate the leak rate by leveraging a leak-rate-prediction neural network. Specifically, the leak component can electronically store, maintain, control, or otherwise access the leak-rate-prediction neural network. In various aspects, the leak-rate-prediction neural network can exhibit any suitable deep learning internal architecture. For example, the leak-rate-prediction neural network can include any suitable numbers of any suitable types of layers (e.g., input layer, one or more hidden layers, output layer, any of which can be convolutional layers, dense layers, LSTM layers, transformer layers, non-linearity layers, pooling layers, batch normalization layers, or padding layers). As another example, the leak-rate-prediction neural network can include any suitable numbers of neurons in various layers (e.g., different layers can have the same or different numbers of neurons as each other). As yet another example, the leak-rate-prediction neural network can include any suitable activation functions (e.g., softmax, sigmoid, hyperbolic tangent, rectified linear unit) in various neurons (e.g., different neurons can have the same or different activation functions as each other). As still another example, the leak-rate-prediction neural network can include any suitable interneuron connections or interlayer connections (e.g., forward connections, skip connections, recurrent connections).

Regardless of its specific internal architecture, the leak-rate-prediction neural network can be considered as a type of regressor that can directly infer a chromatographic leak rate (or at least a chromatographic fluid exit rate) based on an inputted timeseries of droplet images. For instance, the leak-rate-prediction neural network can be configured to receive as input any given temporal sequence of images depicting a certain droplet and to produce as output a scalar indicating how quickly the volume of that certain droplet appears to be growing. In other instances, the leak-rate-prediction neural network can be configured to receive as input any given temporal sequence of images depicting a certain droplet and to produce as output a scalar indicating how quickly fluid is leaking out of non-visible, interior portions of the chromatograph as manifested or informed by how quickly that certain droplet appears to be growing.

Accordingly, in various embodiments, the leak component can execute the leak-rate-prediction neural network on the set of image timeseries, and such execution can yield the leak rate. As a non-limiting example, the leak component can feed all of the set of image timeseries to an input layer of the leak-rate-prediction neural network, the set of image timeseries can complete a forward pass through one or more hidden layers of the leak-rate-prediction neural network, and an output layer of the leak-rate-prediction neural network can compute a scalar whose value or magnitude represents or indicates how fast or how slowly the spatial volume of the droplet, as shown in the set of image timeseries, seems to be growing. In some cases, such scalar can be considered as the leak rate. In other cases, such scalar can instead be considered as a chromatograph fluid exit rate. In such other cases, the leak rate can be equal to a difference between the chromatograph fluid exit rate and a known rate at which fluid is being pumped or inputted into the chromatograph.

No matter whether the droplet-volume-prediction neural network, the droplet-pixel-prediction neural network, or the leak-rate-prediction neural network is used, the leak component can estimate, approximate, or determine the leak rate that seems to be afflicting the liquid chromatograph (e.g., can determine how much of the mobile phase fluid seems to be undesirably leaking out of intermediate tubes, pipes, or seals of the liquid chromatograph).

In various embodiments, the execution component of the computerized tool can electronically perform any suitable electronic actions based on the leak rate that is determined by the leak component. As a non-limiting example, the execution component can, in some aspects, compare the leak rate to any suitable threshold value. If the leak rate is lesser than the threshold value, the execution component can refrain from taking further action. In contrast, if the leak rate is greater than the threshold value, the execution component can electronically notify a user, operator, or technician that the liquid chromatograph is suffering from an excessive leak rate. In some cases, such electronic notification can be in the form of an electronic message that is displayed on a computer screen associated with the liquid chromatograph. In other cases, such electronic notification can instead be in the form of an audible message or alarm that is sounded or played on a computer speaker associated with the liquid chromatograph. In some instances, when the leak rate is greater than the threshold value, the execution component can electronically schedule or otherwise call for servicing or maintenance to be performed on the liquid chromatograph. In some instances, when the leak rate is greater than the threshold value, the execution component can disable functioning of the liquid chromatograph or of an associated mass spectrometer (e.g., can stop or abort an experiment or series of experiments) until the leak issue is addressed or acknowledged by a user.

In order for various embodiments described herein to function properly, the droplet-volume-prediction neural network, the droplet-pixel-prediction neural network, or the leak-rate-prediction neural network can first be trained. In various aspects, the computerized tool can facilitate such training (e.g., in supervised fashion), as described later herein.

Various embodiments described herein can be employed to use hardware or software to solve problems that are highly technical in nature (e.g., to facilitate non-disruptive and shape-unconstrained leak detection in liquid chromatography), that are not abstract and that cannot be performed as a set of mental acts by a human. Further, some of the processes performed can be performed by a specialized computer (e.g., cameras that view an electrospray emitter of a liquid chromatograph; artificial neural networks that receive as input images produced by such cameras) for carrying out defined acts related to liquid chromatography.

For example, such defined acts can include: capturing, via at least one camera, at least one timeseries of images depicting an electrospray emitter of a chromatograph; and determining a leak rate afflicting the chromatograph, based on: executing a droplet-volume-prediction neural network on respective images of the at least one timeseries of images; executing a droplet-pixel-prediction neural network on respective images of the at least one timeseries of images; or executing a leak-rate-prediction neural network on an entirety of the at least one timeseries of images. In situations where the leak-rate-prediction neural network is implemented, an entirety (or possibly less) of the at least one timeseries of images can be fed as input to the leak-rate-prediction neural network, and the leak-rate-prediction neural network can directly produce as output the leak rate (or a fluid exit rate which can then be subtracted from a known fluid entrance rate so as to obtain the leak rate). In situations where the droplet-volume-prediction neural network is implemented, the droplet-volume-prediction neural network can be executed on each image of the at least one timeseries of images, and the droplet-volume-prediction neural network can produce as output a droplet volume for each of such images. Those droplet volumes can be considered as forming a volume timeseries, and a slope of the volume timeseries can be considered as being the leak rate (or as being a fluid exit rate which can then be subtracted from a known fluid entrance rate so as to obtain the leak rate). In situations where the droplet-pixel-prediction neural network is implemented, the droplet-pixel-prediction neural network can be executed on each image of the at least one timeseries of images, and the droplet-pixel-prediction neural network can produce as output a droplet pixel count for each of such images. Those droplet pixel counts can be converted into droplet volumes via any suitable spatial resolution conversion factor, those droplet volumes can be considered as a forming a volume timeseries, and a slope of the volume timeseries can be considered as being the leak rate (or as being a fluid exit rate which can then be subtracted from a known fluid entrance rate so as to obtain the leak rate). In any case, such defined acts can include generating an electronic alert notification or scheduling a maintenance visit for the chromatograph, in response to the leak rate exceeding a threshold value.

Such defined acts are inherently computerized. Indeed, chromatographs and mass spectrometers are highly-technical computerized devices comprising specific computerized hardware (e.g., temperature sensors, pressure sensors, voltage sensors, ion beam emitters, ion focusing lenses, mass analyzers, ion detectors, oven-heated columns, autosamplers, electrospray emitters). Neither chromatographs, mass spectrometers, nor the operations that they perform can be implemented by the human mind, or by a human with pen and paper, in any reasonable or practicable way without computers (e.g., neither the human mind nor a human with pen and paper can inject portions of samples into or through the oven-heated columns, ionizers, mass analyzers, or detectors of a chromatograph or mass spectrometer). Additionally, artificial neural networks are also inherently computerized constructs comprising specific software-oriented architectures (e.g., input layers, hidden layers, or output layers, any of which can be made up of trainable or non-trainable internal parameters such as convolutional layers or LSTM layers). Artificial neural networks cannot be trained or executed by the human mind, or by humans with mere pen and paper, in any reasonable or practicable way without computers.

Moreover, various embodiments described herein can integrate into a practical application various teachings relating to chromatography. As explained above, a liquid chromatograph can operate properly only when its mobile phase leaks out of the piping, tubing, seals, gaskets, or other hardware of the liquid chromatograph at less than any suitable threshold rate. So, to determine whether or not the liquid chromatograph is operating properly, it can be desired to check or measure what leak rate the liquid chromatograph currently or presently has. Some existing techniques check or measure the leak rate by physically plugging and pressurizing the liquid chromatograph. Unfortunately, such existing techniques cannot detect small leak rates (e.g., on the order of µL/min or nL/min) and are physically disruptive to the liquid chromatograph (e.g., require effort-intensive uninstallation of columns and electrospray emitters). Other existing techniques check or measure the leak rate by capturing images of a droplet that is dripping out of an electrospray emitter of the liquid chromatograph and then processing those images. Such other existing techniques can detect small leak rates and are not physically disruptive. However, such other existing techniques have built-in geometric assumptions regarding droplets.

Specifically, such other existing techniques utilize or otherwise rely upon shape-constrained image processing tools to localize and evaluate droplets. An example of such a shape-constrained image processing tool is a round-edge detector, which can be considered as a type of software tool that searches an image for visual edges having at least a threshold level of roundness. Although round-edge detectors can identify perfectly spherical droplets, they struggle with identifying droplets that are not spherical (e.g., that have pronounced teardrop tails or irregular boundaries). Another example of such a shape-constrained image processing tool is a radii estimator, which can be considered as a type of software tool that approximates a radius of a depicted or localized droplet. Although radii estimators make sense when dealing with perfectly spherical droplets, their appropriateness drops significantly when dealing with droplets that are less spherical (e.g., What use or sense is there in determining the "radius" of an irregular or non-circular object?). Yet another example of such a shape-constrained image processing tool is an ellipticity estimator, which can be considered as a type of software tool that approximates an ellipticity of a depicted or localized droplet. Although ellipticity estimators make sense when dealing with elliptical or oblong droplets, their appropriateness drops significantly when dealing with droplets that are irregularly shaped (e.g., Like above, what use or sense is there in determining the "ellipticity" of an amorphous droplet that does not resemble an ellipse?).

Because droplets are often not perfectly round, spherical, or elliptical, such other existing techniques often suffer from degraded leak rate determination accuracy, which can be considered as a technical problem.

Various embodiments described herein can help to ameliorate such technical problems by facilitating non-disruptive and shape-unconstrained leak detection in liquid chromatography. In particular, various embodiments described herein can involve capturing images of a droplet forming on an electrospray emitter of a liquid chromatograph and leveraging artificial neural networks to identify the leak rate by visually analyzing the droplet. In some cases, such leak rate can be inferred directly from such images by a leak-rate-prediction neural network. In other cases, a timeseries of droplet volumes can be inferred from such images by a droplet-volume-prediction neural network, and the leak rate can be equal to or otherwise based on a temporal slope of that timeseries of droplet volumes. In yet other cases, a timeseries of droplet pixel counts can be inferred from such images by a droplet-pixel-prediction neural network, the timeseries of droplet pixel counts can be converted into the timeseries of droplet volumes based on a spatial resolution of the images, and the leak rate can be equal to or otherwise based on a temporal slope of that timeseries of droplet volumes.

Embodiments in which the leak-rate-prediction neural network is implemented can be considered as exhibiting high computational convenience (e.g., no or very little post-processing is needed to convert the output of the leak-rate-prediction neural network to the leak rate) in exchange for low computational explainability (e.g., there can be no intermediate computational steps in between image capture and leak rate determination that are easily checkable or verifiable).

Embodiments in which the droplet-volume-prediction neural network is implemented can be considered as exhibiting moderate computational convenience (e.g., post-processing in the form of slope computation is needed to convert the output of the droplet-volume-prediction neural network to the leak rate) in exchange for moderate computational explainability (e.g., slope computation can be considered as an intermediate computational step in between image capture and leak rate determination that is easily checkable or verifiable).

Embodiments in which the droplet-pixel-prediction neural network is implemented can be considered as exhibiting low computational convenience (e.g., post-processing in the form of pixel-to-volume conversion and slope computation is needed to convert the output of the droplet-pixel-prediction neural network to the leak rate) in exchange for high computational explainability (e.g., pixel-to-volume conversion and slope computation can be considered as two intermediate computational steps in between image capture and leak rate determination that are easily checkable or verifiable).

In any case, various embodiments described herein are not physically disruptive of the liquid chromatograph, because such embodiments do not require physical plugging and pressurizing. Additionally, various embodiments described herein are not shape-constrained, because any of the leak-rate-prediction neural network, the droplet-volume-prediction neural network, or the droplet-pixel-prediction neural network can be trained to perform its respective inferencing task (e.g., direct prediction of leak rate; prediction of spatial volumes occupied by depicted droplets; prediction of number of pixels taken up by depicted droplets) without having built-in assumptions regarding droplet geometry. Indeed, the herein-described neural networks can be considered as learning (e.g., through the training described later herein) how to visually recognize or evaluate droplets without explicit roundness, ellipticity, or radii constraints. Thus, such neural networks can be accurately or reliably implemented even for droplets that are not round, elliptical, or spherical. Contrast this with existing techniques, which are either physically disruptive or inaccurate when dealing with irregularly-shaped droplets.

For at least these reasons, various embodiments described herein can be considered as a concrete and tangible technical improvement in the field of chromatography. Accordingly, various embodiments described herein certainly qualify as useful and practical applications of computers.

Furthermore, various embodiments described herein can control real-world tangible devices based on the disclosed teachings. For example, various embodiments described herein can electronically activate, deactivate, or otherwise actuate real-world hardware (e.g., sample injectors, ion beam emitters, ion focusing lenses, carrier fluid valves/pumps) of real-world scientific instruments (e.g., chromatographs, mass spectrometers, cameras).

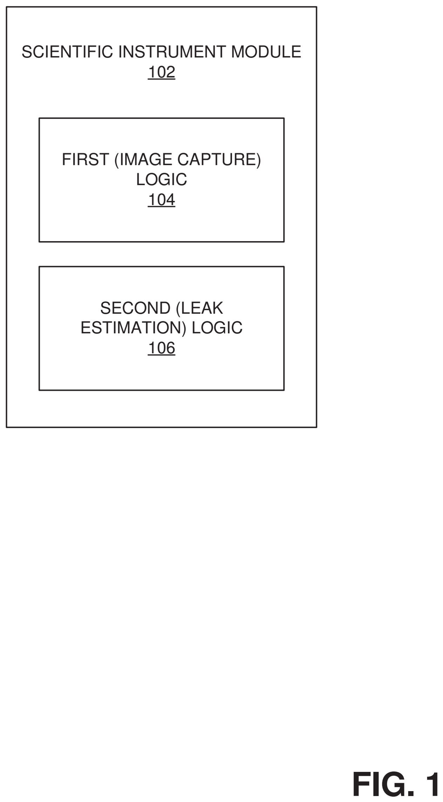

FIG. 1 illustrates an example, non-limiting block diagram of a scientific instrument module 102 in accordance with various embodiments described herein.

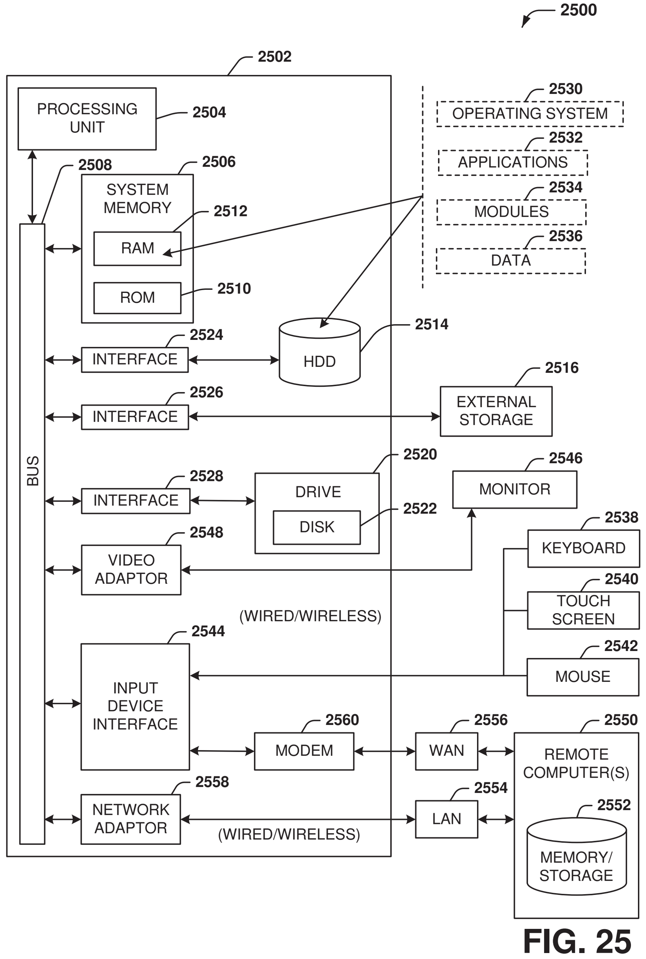

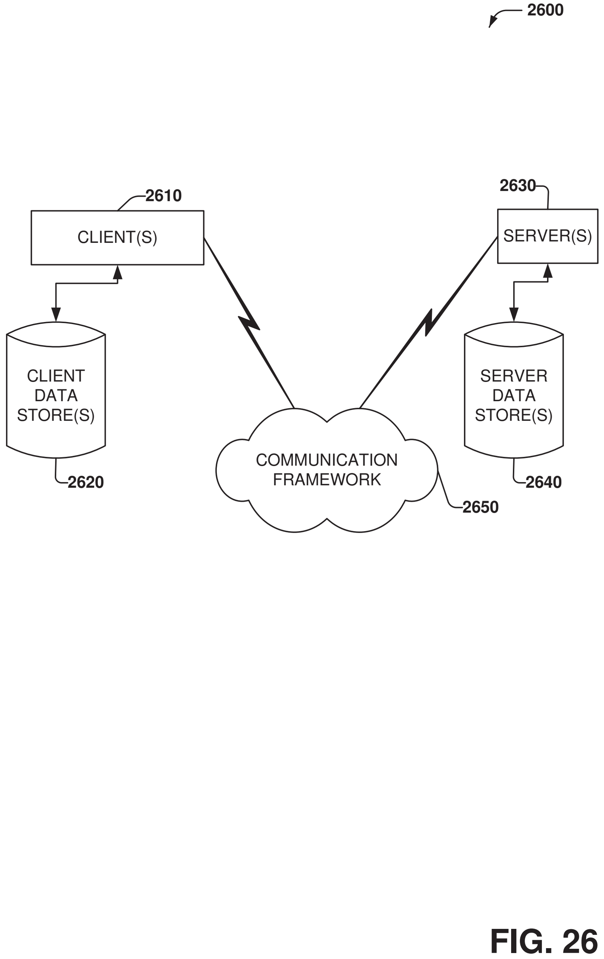

In various embodiments, the scientific instrument module 102 can be implemented by circuitry (e.g., including electrical or optical components), such as a programmed computing device. Logic of the scientific instrument module 102 can be included in a single computing device or can be distributed across multiple computing devices that are in communication with each other as appropriate. Examples of computing devices that may, singly or in combination, implement the scientific instrument module 102 are discussed herein with reference to FIG. 25, and examples of systems or networks of interconnected computing devices, in which the scientific instrument module 102 may be implemented across one or more of the computing devices, are discussed herein with reference to FIG. 26.

The scientific instrument module 102 can include first logic 104 and second logic 106. As used herein, the term "logic" can include an apparatus that is to perform a set of operations associated with the logic. For example, any of the logic elements included in the scientific instrument module 102 can be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" can refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module can omit one or more of the logic elements depicted in the associated drawings; for example, a module may include a subset of the logic elements depicted in the associated drawings when that module is to perform a subset of the operations discussed herein with reference to that module.

In various embodiments, there can be a scientific instrument corresponding to the scientific instrument module 102. In various aspects, the scientific instrument can be any suitable computerized device that can electronically measure some scientifically-relevant, clinically-relevant, or research-relevant characteristic, property, or attribute of an analytical sample (e.g., of a known or unknown mixture, compound, or collection of matter). As a non-limiting example, the scientific instrument can be a chromatograph that is operatively coupled to a mass spectrometer. In such case, the scientific instrument can measure or capture chromatograms (e.g., relative species abundance as a function of retention time) or mass spectra (e.g., relative ion abundance as a function of mass-to-charge ratio) of the analytical sample.

In various embodiments, the first logic 104 can cause the scientific instrument to capture, via a camera, a timeseries of images depicting an electrospray emitter of the scientific instrument. In various aspects, the electrospray emitter can be responsible for spraying or otherwise physically delivering eluted chemical species from the chromatograph to the mass spectrometer.

In various embodiments, the second logic 106 can determine a leak rate afflicting the chromatograph, based on: executing a droplet-volume-prediction neural network on respective ones of the timeseries of images; executing a droplet-pixel-prediction neural network on respective ones of the timeseries of images; or executing a leak-rate-prediction neural network on an entirety of the timeseries of images. In any case, the leak rate can be determined without having to physically plug, pressurize, or otherwise disrupt the scientific instrument, and without relying upon questionable or inapplicable assumptions regarding droplet shape.

Accordingly, the scientific instrument module 102 can facilitate non-disruptive and shape-unconstrained leak detection in liquid chromatography.

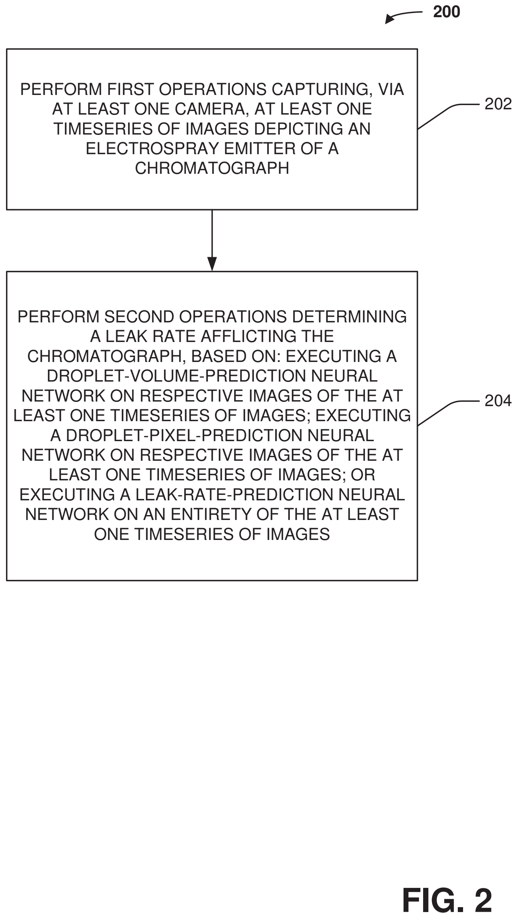

FIG. 2 is an example, non-limiting flow diagram of a computer-implemented method 200 in accordance with various embodiments described herein. The operations of the computer-implemented method 200 may be used in any suitable setting to perform any suitable operations (e.g., can be performed by or used in conjunction with any of the various modules, computing devices, or graphical user interfaces described with respect to of FIGs. 1, 25, or 26). Operations are illustrated once each and in a particular order in FIG. 2, but the operations may be reordered or repeated as desired and appropriate (e.g., different operations performed may be performed in parallel, as suitable).

In various aspects, act 202 can include performing first operations capturing, via at least one camera, at least one timeseries of images depicting an electrospray emitter of a chromatograph. In various cases, the first logic 104 can perform or otherwise facilitate act 202.

In various instances, act 204 can include performing second operations determining a leak rate afflicting the chromatograph, based on: executing a droplet-volume-prediction neural network on respective images of the at least one timeseries of images; executing a droplet-pixel-prediction neural network on respective images of the at least one timeseries of images; or executing a leak-rate-prediction neural network on an entirety of the at least one timeseries of images. In various cases, the second logic 106 can perform or otherwise facilitate act 204.

Accordingly, the computer-implemented method 200 can facilitate non-disruptive and shape-unconstrained leak detection in liquid chromatography.

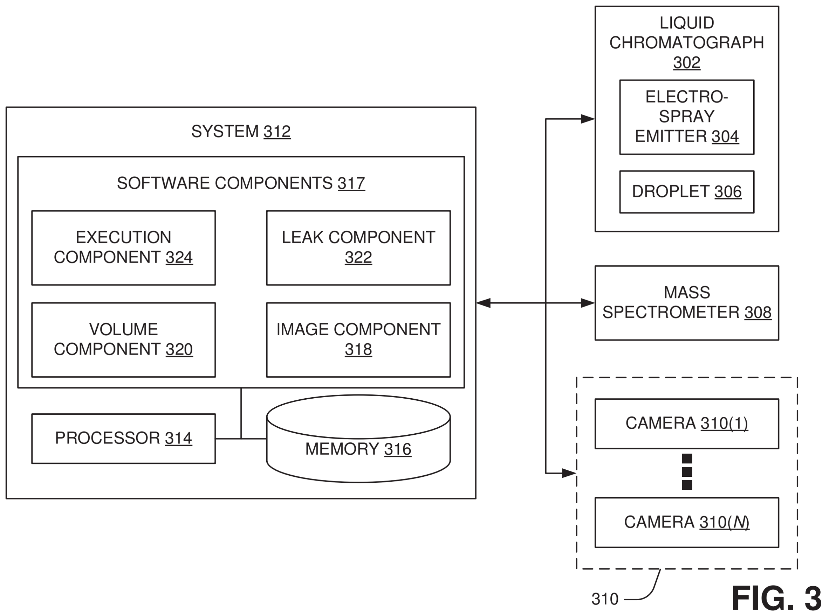

FIG. 3 illustrates a block diagram of an example, non-limiting system that can facilitate non-disruptive and shape-unconstrained leak detection in liquid chromatography in accordance with one or more embodiments described herein.

In various embodiments, there can be a liquid chromatograph 302. In various aspects, the liquid chromatograph 302 can comprise any suitable constituent hardware for separating an analytical sample into two or more compositional parts using a liquid mobile phase (e.g., using a carrier liquid rather than a carrier gas). As a non-limiting example, the constituent hardware can comprise an injector, an oven-heated column, and carrier liquid valves or pumps. In various aspects, the carrier liquid valves or pumps can cause a carrier liquid (e.g., water, acetonitrile, methanol, ethanol, tetrahydrofuran, hexane, isopropanol, or any suitable water-organic-solvent mixture) to flow through the liquid chromatograph 302. In various instances, the injector can inject an analytical sample (e.g., a mixture or solution to be measured or analyzed) into the flowing carrier liquid. In various cases, the injected analytical sample can be carried by the flowing carrier liquid through the oven-heated column, which can contain any suitable absorbent packing material or stationary phase film. In various aspects, different compositional parts (e.g., different chemical elements, molecules, analytes, or species) of the analytical sample can interact differently or uniquely with the absorbent packing material or stationary phase film, thereby causing the different compositional parts of the analytical sample to have different flow rates through the oven-heated column. Due to such different flow rates, the different compositional parts can be considered as being physically separated from each other at different times (e.g., at respective retention times).

In various instances, the liquid chromatograph 302 can include or have an electrospray emitter 304. In various cases, the electrospray emitter 304 can be any suitable nozzle that, when subjected or exposed to any suitable electric field, can spray eluted compositional parts of the analytical sample toward an inlet aperture of a mass spectrometer 308.

In various aspects, the mass spectrometer 308 can comprise any suitable constituent hardware for measuring ion spectra of eluted compositional parts of analytical samples. As a non-limiting example, the constituent hardware can comprise an ion beam emitter, ion optics equipment, a mass analyzer, and an ion detector. In various cases, the ion beam emitter can receive from the electrospray emitter 304 an eluted compositional part of the analytical sample and can ionize that eluted compositional part into an ion beam. The ion beam emitter can facilitate this via any suitable ionization technique, such as electron ionization, chemical ionization, matrix assisted laser desorption ionization, electrospray ionization, photoionization, or inductively coupled plasma ionization, any of which can be implemented in a vacuum or at atmospheric pressure. In various aspects, the ion optics equipment can channel or steer the ion beam produced by the ion beam emitter through the mass analyzer and to the ion detector. Non-limiting examples of such ion optics equipment can include ion focusing lenses, ion guides, or ion deflectors. In various instances, the mass analyzer can separate or sort whatever ions are present in the ion beam according to their mass-to-charge ratios. Non-limiting examples of the mass analyzer can include quadrupole mass analyzers, time-of-flight mass analyzers, magnetic sector mass analyzers, electrostatic sector mass analyzers, quadrupole ion trap mass analyzers, or ion cyclotron resonance mass analyzers. In various cases, the ion detector can electronically detect or measure the relative abundances of whatever ions strike it. Non-limiting examples of the ion detector can include electron multiplier ion detectors or Faraday cup ion detectors.

In various aspects, when the liquid chromatograph 302 is not currently active but is nevertheless filled with a carrier liquid, some of that carrier liquid can gradually pool (e.g., due to gravity, due to pressure losses in the liquid chromatograph 302) at a tip, exit, or outlet of the electrospray emitter 304. Such pooling can be considered as forming a droplet 306 which can hang or protrude from the tip, exit, or outlet of the electrospray emitter 304. In various instances, the droplet 306 can have any suitable regular or irregular shape. In various cases, as more carrier liquid pools at the tip, exit, or outlet of the electrospray emitter 304, the droplet 306 can grow in size or volume.

In various aspects, there can be a set of cameras 310. In various instances, the set of cameras 310 can include or be made up of a total of n cameras, for any suitable positive integer *n:* a camera 310(1) to a camera *310(n).* In other words, n can be greater than or equal to 1. In still other words, the set of cameras 310 can be made up of at least one camera. In various cases, each of the set of cameras 310 can exhibit any suitable mechanical, electrical, or digital design or construction for capturing visible-spectrum (or possibly non-visible spectrum) photographs or videos. It should be understood or otherwise appreciated that different ones of the set of cameras 310 can exhibit or have the same or different mechanical, electrical, or digital designs or constructions as each other (e.g., all of the set of cameras 310 can be configured to capture visible-spectrum photographs or videos; or some of the set of cameras 310 can be configured to capture visible-spectrum photographs or videos while others of the set of cameras 310 can instead be configured to capture thermal-spectrum photographs or videos or infrared-spectrum photographs or videos). In some instances, the set of cameras 310 can be configured to capture a limited light spectrum such as by filtering to a specific set of wavelengths appropriate for fluorescence, luminescence, or Raman detection.

In various aspects, the set of cameras 310 can be aimed at the electrospray emitter 304. That is, the electrospray emitter 304 can be seen by, or otherwise within the visual field of, each of the set of cameras 310. In some instances, each of the set of cameras 310 can be considered as viewing or surveilling the electrospray emitter 304 from a respective or unique perspective. As a non-limiting example, a first camera of the set of cameras 310 can be physically oriented so as to have a top-view of the electrospray emitter 304. As another non-limiting example, a second camera of the set of cameras 310 can be physically oriented so as to have a bottom-view of the electrospray emitter 304. As yet another non-limiting example, a third camera of the set of cameras 310 can be physically oriented so as to have a side-view of the electrospray emitter 304. As still another non-limiting example, a fourth camera of the set of cameras 310 can be physically oriented so as to have a back-view of the electrospray emitter 304. As even another non-limiting example, a fifth camera of the set of cameras 310 can be physically oriented so as to have a front-view of the electrospray emitter 304. As another non-limiting example, a sixth camera of the set of cameras 310 can be physically oriented so as to have any suitable isometric-view of the electrospray emitter 304. As yet another non-limiting example, a seventh camera of the set of cameras 310 can be physically oriented so as to have any suitable slanted, irregular, or other type of view of the electrospray emitter 304.

It should be understood or otherwise appreciated that, in some cases, two or more cameras that are configured to capture different types (e.g., visible-spectrum versus nonvisible-spectrum) of photographs or videos can have the same physical orientation as each other, so as to view the electrospray emitter 304 from the same perspective as each other.

In any case, it can be desired to determine a leak rate of the liquid chromatograph 302 (e.g., to determine how quickly carrier fluid is undesirably or unintentionally leaking out of internal pipes, tubes, or seals of the liquid chromatograph 302). As described herein, a system 312 can facilitate or otherwise accomplish such objective.

In various aspects, the system 312 can comprise a processor 314 (e.g., computer processing unit, microprocessor) and a non-transitory computer-readable memory 316 that is operably or operatively or communicatively connected or coupled to the processor 314. The non-transitory computer-readable memory 316 can store computer-executable instructions which, upon execution by the processor 314, can cause the processor 314 or other components of the system 312 (e.g., image component 318, volume component 320, leak component 322, execution component 324) to perform one or more acts. In various embodiments, the non-transitory computer-readable memory 316 can store computer-executable components (e.g., image component 318, volume component 320, leak component 322, execution component 324), and the processor 314 can execute the computer-executable components.

In various embodiments, the system 312 can be electronically coupled or integrated to or with the liquid chromatograph 302, the mass spectrometer 308, or the set of cameras 310 via any suitable wired or wireless electronic connections. So, the system 312 can electronically access the liquid chromatograph 302, the mass spectrometer 308, or the set of cameras 310. That is, the system 312 can electronically communicate or otherwise electronically interact with (e.g., transmit electronic instructions or commands to, receive electronic data from) the liquid chromatograph 302, the mass spectrometer 308, or the set of cameras 310. Accordingly, any component of the system 312 can interact with, communicate with, or otherwise manipulate the liquid chromatograph 302, the mass spectrometer 308, or the set of cameras 310.

In various embodiments, the system 312 can include an image component 318. In various aspects, the image component 318 can, as described herein, cause the set of cameras 310 to capture a set of image timeseries depicting or illustrating the droplet 306.

In various embodiments, the system 312 can include a volume component 320. In various instances, the volume component 320 can, as described herein, generate a timeseries of volumes of the droplet 306, based on the set of image timeseries.

In various embodiments, the system 312 can include a leak component 322. In various cases, the leak component 322 can, as described herein, compute a leak rate for the liquid chromatograph 302, based on the timeseries of volumes of the droplet 306.

In various embodiments, the system 312 can include an execution component 324. In various aspects, the execution component 324 can, as described herein, perform any suitable follow-up or downstream electronic actions based on the leak rate.

Note that, in various instances, the image component 318, the volume component 320, the leak component 322, and the execution component 324 can collectively be considered as being one or more software components 317 of the system 312. In various aspects, it should be appreciated that the one or more software components 317 are described primarily herein as comprising four components (e.g., the image component 318, the volume component 320, the leak component 322, and the execution component 324) for ease of explanation and illustration. However, the one or more software components 317 are not limited to being implemented as exactly such four components in every embodiment. Indeed, in some embodiments, the functionalities described herein of such four components can be combined in any suitable fashions, so as to be implemented in or by fewer than four components (e.g., in some cases, a single component can perform all of the functionalities that are described herein with respect to the image component 318, the volume component 320, the leak component 322, and the execution component 324). In other embodiments, the functionalities described herein of such four components can instead be distributed, separated, split, or fragmented in any suitable fashions, so as to be implemented in or by more than four components (e.g., two or more components can facilitate the functionalities that are performable by the image component 318; two or more components can facilitate the functionalities that are performable by the volume component 320; two or more components can facilitate the functionalities that are performable by the leak component 322; two or more components can facilitate the functionalities that are performable by the execution component 324).

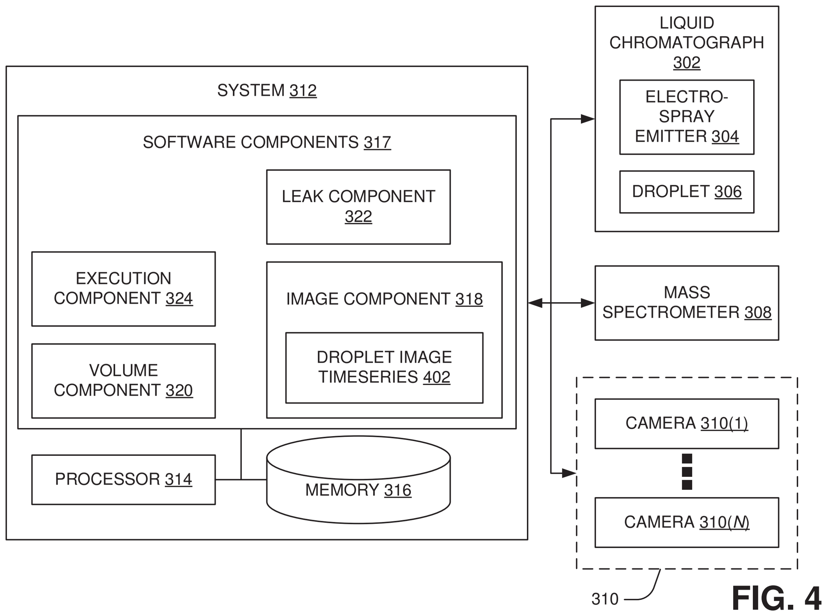

FIG. 4 illustrates a block diagram of an example, non-limiting system including a set of droplet image timeseries that can facilitate non-disruptive and shape-unconstrained leak detection in liquid chromatography in accordance with one or more embodiments described herein.

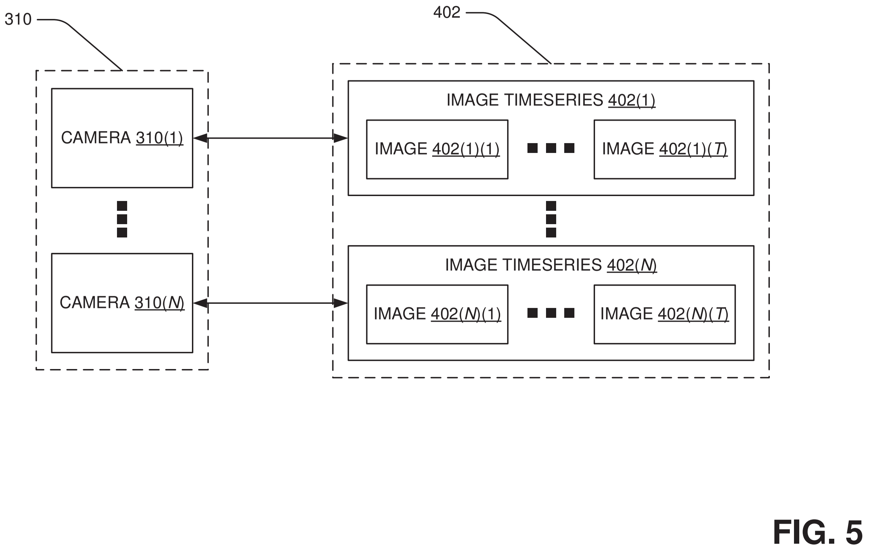

In various embodiments, the image component 318 can electronically instruct, electronically command, or otherwise electronically cause the set of cameras 310 to capture or generate a set of droplet image timeseries 402. Various non-limiting aspects are described with respect to FIG. 5.

FIG. 5 illustrates an example, non-limiting block diagram showing how the set of droplet image timeseries 402 can be obtained in accordance with one or more embodiments described herein.

In various embodiments, the set of droplet image timeseries 402 can respectively correspond (e.g., in one-to-one fashion) with the set of cameras 310. Thus, since the set of cameras 310 can have a total of n cameras, the set of droplet image timeseries 402 can likewise have a total of n timeseries: an image timeseries 402(1) to an image timeseries 402(*n*). In various aspects, each of the set of droplet image timeseries 402 can be a temporal or chronological sequence of images of the electrospray emitter 304, and thus of the droplet 306, that is captured by a respective one of the set of cameras 310. For ease of illustration and explanation, suppose that each of the set of droplet image timeseries 402 contains *t* timesteps, for any suitable positive integer *t*, where a timestep can span any suitable amount or interval of time (e.g., a timestep can span 0.01 seconds, such that 100 timesteps constitutes 1 second).

As a non-limiting example, the image timeseries 402(1) can be captured or generated by the camera 310(1). Accordingly, the image timeseries 402(1) can be a temporal or chronological sequence of *t* images that each depicts or illustrates the droplet 306 from whatever spatial perspective corresponds to the camera 310(1). For instance, the image timeseries 402(1) can include an image 402(1)(1), which can be an *x-by-y* array of pixels, for any suitable positive integers *x* and *y,* that depicts the droplet 306 from the spatial perspective or orientation of the camera 310(1) at an initial or beginning timestep. Likewise, the image timeseries 402(1) can include an image 402(1)(*t*)*,* which can be an *x-*by*-y* array of pixels that depicts the droplet 306 from the spatial perspective or orientation of the camera 310(1) at a *t*-th or final timestep. In various cases, the image timeseries 402(1) can be considered as showing how the droplet 306, when viewed from the perspective of the camera 310(1), grows, changes, or otherwise physically evolves over the course of *t* timesteps.

As another non-limiting example, the image timeseries 402(n) can be captured or generated by the camera 310(*n*). Accordingly, the image timeseries 402(n) can be a temporal or chronological sequence of *t* images that each depicts or illustrates the droplet 306 from whatever spatial perspective corresponds to the camera 310(*n*). For instance, the image timeseries 402(*n*) can include an image 402(*n*)(1), which can be an *x-*by*-y* array of pixels that depicts the droplet 306 from the spatial perspective or orientation of the camera 310(*n*) at the initial or beginning timestep. Likewise, the image timeseries 402(n) can include an image 402(*n*)(*t*), which can be an *x*-by-*y* array of pixels that depicts the droplet 306 from the spatial perspective or orientation of the camera 310(*n*) at the t-th or final timestep. In various cases, the image timeseries 402(*n*) can be considered as showing how the droplet 306, when viewed from the perspective of the camera 310(*n*)*,* grows, changes, or otherwise physically evolves over the course of *t* timesteps.

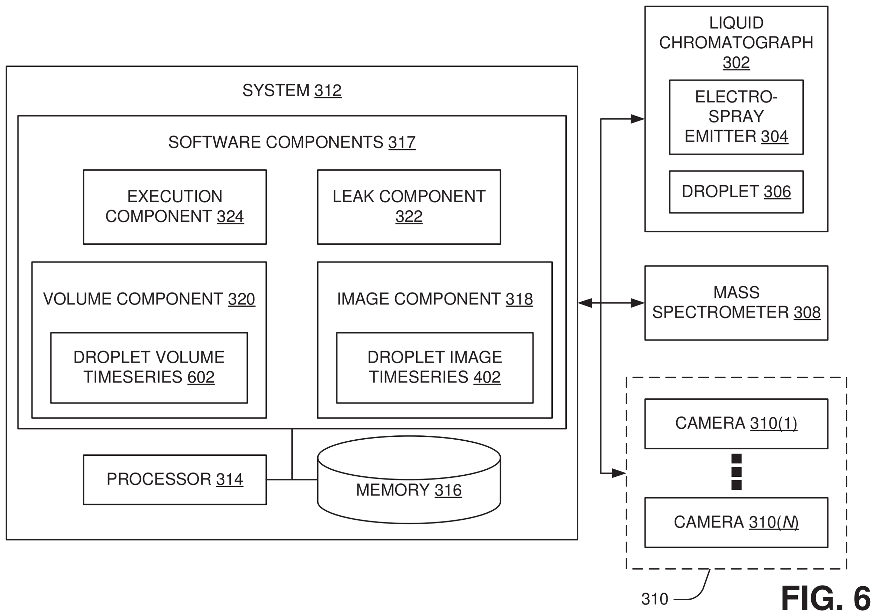

FIG. 6 illustrates a block diagram of an example, non-limiting system including a droplet volume timeseries that can facilitate non-disruptive and shape-unconstrained leak detection in liquid chromatography in accordance with one or more embodiments described herein.

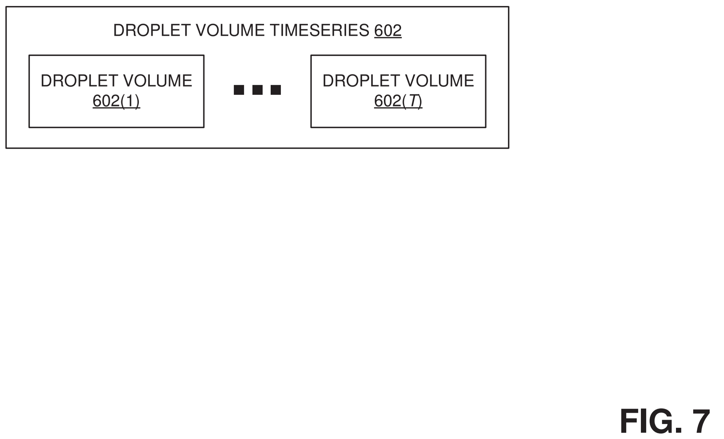

In various embodiments, the volume component 320 can electronically generate a droplet volume timeseries 602, based on the set of droplet image timeseries 402. Various non-limiting aspects are described with respect to FIGs. 7-10.

FIGs. 7-10 illustrate example, non-limiting block diagrams showing how the droplet volume timeseries 602 can be obtained in accordance with one or more embodiments described herein.

First, consider FIG. 7. In various embodiments, the droplet volume timeseries 602 can be a temporal or chronological sequence of *t* scalars that each indicates or represents a spatial volume occupied by the droplet 306 at a respective timestep. As a non-limiting example, the droplet volume timeseries 602 can include a droplet volume 602(1) to a droplet volume 602(t). In various aspects, the droplet volume 602(1) can be a real-valued scalar whose magnitude indicates or represents how much physical space (e.g., measured in units of liters, mL, µL, or nL) is taken up by the droplet 306 at the initial or beginning timestep. Similarly, the droplet volume 602(t) can be a real-valued scalar whose magnitude indicates or represents how much physical space is taken up by the droplet 306 at the t-th or final timestep.

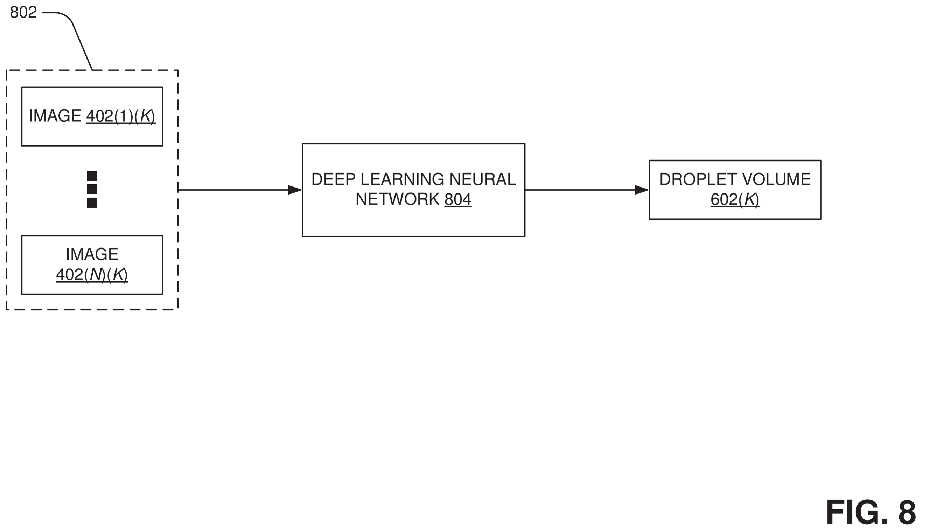

In some embodiments, the droplet volume timeseries 602 can be inferred directly from the set of droplet image timeseries 402, such as is shown with respect to FIG. 8.

In particular, as shown in FIG. 8, the volume component 320 can electronically store, electronically maintain, electronically control, or otherwise electronically access a deep learning neural network 804. In various embodiments, the deep learning neural network 804 can exhibit any suitable type of deep learning internal architecture. Indeed, in various cases, the deep learning neural network 804 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. As even another example, any of such input layer, one or more hidden layers, or output layer can be LSTM layers, whose learnable or trainable parameters can be input-state weight matrices or hidden-state weight matrices. As yet another example, any of such input layer, one or more hidden layers, or output layer can be transformer layers, whose learnable or trainable parameters can be single-head or multi-head attention blocks or other weight matrices. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers.

Regardless of the specific internal architecture (e.g., the specific numbers, types, or organizations of layers) that is implemented within the deep learning neural network 804, the deep learning neural network 804 can be configured as a regressor that visually estimates or approximates droplet volumes. In particular, the deep learning neural network 804 can be configured to receive as input any given set of images that depict a droplet at a particular instant in time and to produce as output a continuously-variable scalar that indicates how much physical space that droplet appears or seems to occupy at that particular instant in time. Accordingly, the volume component 320 can, in various aspects, electronically execute the deep learning neural network 804 on respective images from the set of droplet image timeseries 402, so as to yield the droplet volume timeseries 602.

As a non-limiting example, consider a k-th timestep, for any suitable positive integer *k* ≤ *t.* In various aspects, the volume component 320 can select from the set of droplet image timeseries 402 all images that depict the droplet 306 at the k-th timestep. Such selected images can be referred to as a set of *k*-th timestep images 802. Note that the set of k-th timestep images 802 can have a total of n images: the image 402(1)(*k*) to the image 402(*n*)(*k*)*.* In various instances, the volume component 320 can electronically execute the deep learning neural network 804 on the set of *k*-th timestep images 802, and such execution can yield a droplet volume 602(*k*). More specifically, the volume component 320 can concatenate the set of *k*-th timestep images 802 together and can feed that concatenation to the input layer of the deep learning neural network 804. In various instances, that concatenation can complete a forward pass through the one or more hidden layers of the deep learning neural network 804. In various cases, the output layer of the deep learning neural network 804 can calculate or compute the droplet volume 602(*k*), based on whatever activation maps or feature maps are produced by the one or more hidden layers. In any case, the droplet volume 602(*k*), which can be considered as one element of the droplet volume timeseries 602, can be any suitable scalar whose value or magnitude indicates how much physical space the deep learning neural network 804 believes that the droplet 306 occupies at the *k*-th timestep. In other words, the deep learning neural network 804 can be considered as inferring or predicting the physical, real-world volume occupied by the droplet 306 at the *k*-th timestep, based on the visual appearance (from *n* distinct or respective orientations or perspectives) of the droplet 306 as shown in the set of *k*-th timestep images 802.

By executing the deep learning neural network 804 in this fashion, a respective volume can be inferred or predicted for the droplet 306 at each of the *t* timesteps, thereby yielding the droplet volume timeseries 602.

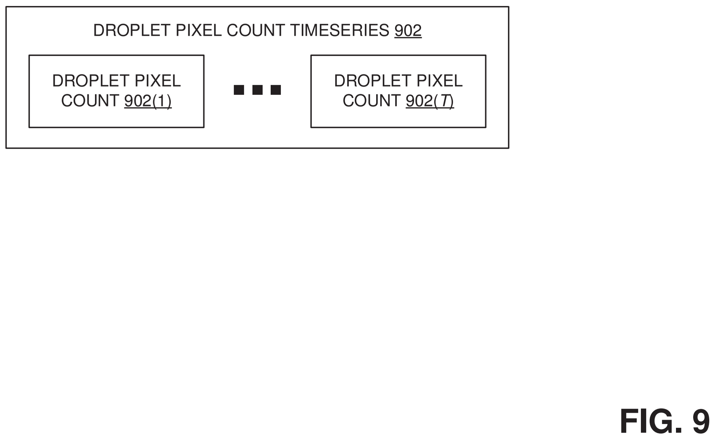

In other embodiments, rather than being directly inferred from the set of droplet image timeseries 402, the droplet volume timeseries 602 can instead be inferred indirectly from the set of droplet image timeseries 402, such as is shown with respect to FIGs. 9-10.

Consider FIG. 9. In various aspects, the volume component 320 can electronically generate or compute a droplet pixel count timeseries 902, based on the set of droplet image timeseries 402. In various instances, the droplet pixel count timeseries 902 can be a temporal or chronological sequence of *t* scalars that each indicates or represents a number of pixels occupied by the droplet 306 at a respective timestep. As a non-limiting example, the droplet pixel count timeseries 902 can include a droplet pixel count 902(1) to a droplet pixel count 902(t). In various aspects, the droplet pixel count 902(1) can be a real-valued scalar whose magnitude indicates or represents the number or cardinality of pixels (e.g., measured in units of cubic pixels or pixels cubed) that make up or collectively form the droplet 306 at the initial or beginning timestep. In other words, an individual pixel can be considered as a two-dimensional projection of a three-dimensional cubic pixel (e.g., of a voxel or block), and the droplet pixel count 902(1) can be considered as the number of those three-dimensional cubic pixels that, as illustrated in the set of droplet image timeseries 402, stack together to form the droplet 306 at the initial or beginning timestep. Likewise, the droplet pixel count 902(*t*) can be a real-valued scalar whose magnitude indicates or represents how much physical space is taken up by the droplet 306 at the *t*-th or final timestep. As above, an individual pixel can be considered as a two-dimensional projection of a three-dimensional cubic pixel, and so the droplet pixel count 902(*t*) can be considered as the number of those three-dimensional cubic pixels that, as illustrated in the set of droplet image timeseries 402, stack together to form the droplet 306 at the t-th or final timestep.

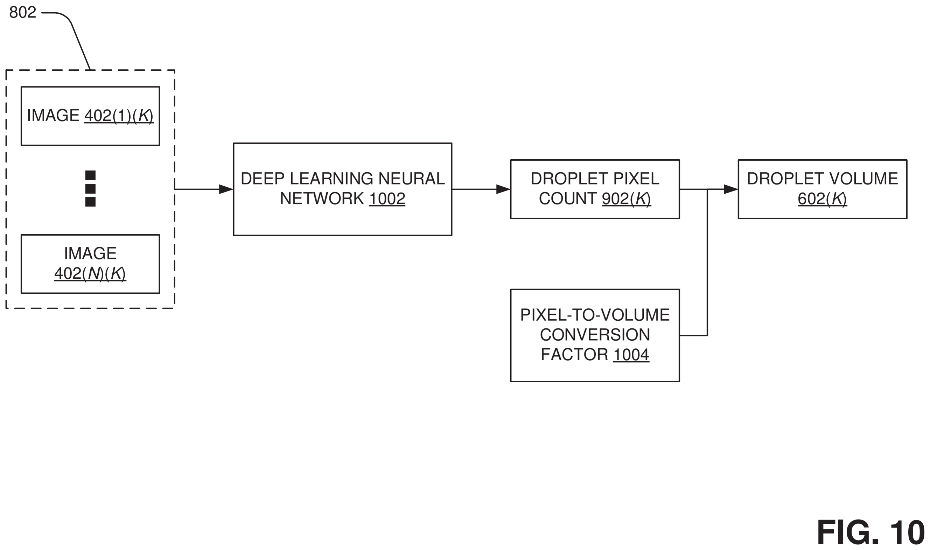

Next, consider FIG. 10. In various embodiments, the volume component 320 can electronically store, electronically maintain, electronically control, or otherwise electronically access a deep learning neural network 1002. In various embodiments, the deep learning neural network 1002 can exhibit any suitable type of deep learning internal architecture. Indeed, in various cases, the deep learning neural network 1002 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. As even another example, any of such input layer, one or more hidden layers, or output layer can be LSTM layers, whose learnable or trainable parameters can be input-state weight matrices or hidden-state weight matrices. As yet another example, any of such input layer, one or more hidden layers, or output layer can be transformer layers, whose learnable or trainable parameters can be single-head or multi-head attention blocks or other weight matrices. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers.

Regardless of the specific internal architecture (e.g., the specific numbers, types, or organizations of layers) that is implemented within the deep learning neural network 1002, the deep learning neural network 1002 can be configured as a regressor that visually estimates or approximates droplet pixel counts. In particular, the deep learning neural network 1002 can be configured to receive as input any given set of images that depict a droplet at a particular instant in time and to produce as output a continuously-variable scalar that indicates how many pixels that droplet appears or seems to occupy at that particular instant in time. Accordingly, the volume component 320 can, in various aspects, electronically execute the deep learning neural network 1002 on respective images from the set of droplet image timeseries 402, so as to yield the droplet pixel count timeseries 902.

As a non-limiting example, consider again the *k*-th timestep. In various aspects, as mentioned above, the volume component 320 can select from the set of droplet image timeseries 402 all images that depict the droplet 306 at the *k*-th timestep, and such selected images can be referred to as the set of *k*-th timestep images 802. In various instances, the volume component 320 can electronically execute the deep learning neural network 1002 on the set of *k*-th timestep images 802, and such execution can yield a droplet pixel count 902(k). More specifically, the volume component 320 can concatenate the set of *k*-th timestep images 802 together and can feed that concatenation to the input layer of the deep learning neural network 1002. In various instances, that concatenation can complete a forward pass through the one or more hidden layers of the deep learning neural network 1002. In various cases, the output layer of the deep learning neural network 1002 can calculate or compute the droplet pixel count 902(k), based on whatever activation maps or feature maps are produced by the one or more hidden layers. In any case, the droplet pixel count 902(k), which can be considered as one element of the droplet pixel count timeseries 902, can be any suitable scalar whose value or magnitude indicates how many cubic pixels the deep learning neural network 1002 believes that the droplet 306 occupies at the *k*-th timestep. In other words, the deep learning neural network 1002 can be considered as counting how many three-dimensional pixel blocks stack together to form the droplet 306 at the *k*-th timestep, based on the visual appearance (from n distinct or respective orientations or perspectives) of the droplet 306 as shown in the set of *k*-th timestep images 802.

By executing the deep learning neural network 1002 in this fashion, a respective pixel count can be inferred or predicted for the droplet 306 at each of the *t* timesteps, thereby yielding the droplet pixel count timeseries 902.

In various aspects, the volume component 320 can convert or transform the droplet pixel count 902(*k*) into the droplet volume 602(k), by leveraging a pixel-to-volume conversion factor 1004. In various instances, the pixel-to-volume conversion factor 1004 can be any suitable scalar that relates or correlates pixel counts to real-world, spatial volumes. In some cases, the pixel-to-volume conversion factor 1004 can be based on a spatial resolution exhibited by each of the set of cameras 310. As a non-limiting example, suppose that each of the set of cameras 310 utilizes uniform, square-shaped pixels, where each pixel-side spans a distance of *p* centimeters (cm), for any suitable positive real number *p*. In such case, the spatial resolution of the set of cameras 310, and thus of the images that make up the set of droplet image timeseries 402, can be considered as being *p* cm/pixel. Accordingly, in various aspects, the pixel-to-volume conversion factor 1004 can be equal to (or otherwise based on) *p*³ mL/(pixel)³. Because the droplet pixel count 902(*k*) can, in some instances, be expressed in units of cubic pixels, the volume component 320 can multiply the droplet pixel count 902(*k*) by the pixel-to-volume conversion factor 1004, and whatever product results from such multiplication can be considered as the droplet volume 602(*k*). By leveraging the pixel-to-volume conversion factor 1004 in this way, the volume component 320 can convert the droplet pixel timeseries 902 into the droplet volume timeseries 602.

In some cases, the spatial resolution of the set of cameras 310 can be known or selectively controllable. In other cases, the spatial resolution can be initially unknown. In such situations, the volume component 320 can electronically identify the spatial resolution in any suitable fashion.

As a non-limiting example, there can be a constituent piece of hardware of the liquid chromatograph 302 (e.g., the electrospray emitter 304) or of the mass spectrometer 308 (e.g., an inlet aperture of the mass spectrometer 308). In various aspects, such constituent piece of hardware can have a known physical size expressed as a linear dimension (e.g., a known height, a known diameter, a known thickness). Moreover, that constituent piece of hardware can be visible by the set of cameras 310, such that a straight line of pixels overlays or spans that known linear dimension of that constituent piece of hardware. Accordingly, the volume component 320 can utilize any suitable image processing tools (e.g., image calipers, pre-trained object recognition algorithms or object localization algorithms) to count how many pixels are in that straight line of pixels. Thus, a ratio between that known linear dimension and the number of pixels that make up that straight line of pixels can be considered as being the spatial resolution of the set of cameras 310.

As another non-limiting example, there can be a constituent piece of hardware of the liquid chromatograph 302 (e.g., the electrospray emitter 304) or of the mass spectrometer 308 (e.g., an inlet aperture of the mass spectrometer 308). In various aspects, such constituent piece of hardware can be coupled to any suitable mechanical or electrical actuators (e.g., servo motors), so that such constituent piece of hardware can be physically movable. Thus, in various instances, the volume component 320 can electronically command, instruct, or otherwise cause those mechanical or electrical actuators to shift the constituent piece of hardware by a known physical distance (e.g., by a known number of centimeters). Moreover, that constituent piece of hardware can be visible by the set of cameras 310, both before and after such shifting. Accordingly, the volume component 320 can utilize any suitable image processing tools (e.g., image calipers, pre-trained object recognition algorithms or object localization algorithms) to determine what intra-image displacement such shifting caused the constituent piece of hardware to undergo. For instance, the constituent piece of hardware can have a landmark or point of interest, the volume component 320 can identify a straight line of pixels that begins from a pre-shift position of that landmark or point of interest and that ends at a post-shift position of that landmark or point of interest, and the volume component 320 can count how many pixels are in that straight line of pixels. Thus, a ratio between the known physical distance that the constituent piece of hardware was shifted and the number of pixels that make up that straight line of pixels can be considered as being the spatial resolution of the set of cameras 310.

By leveraging the deep learning neural network 1002 and the pixel-to-volume conversion factor 1004 in this fashion, a respective pixel count and volume can be inferred or predicted for the droplet 306 at each of the *t* timesteps, thereby yielding the droplet pixel count timeseries 902 and the droplet volume timeseries 602.

In any case, the volume component 320 can generate the droplet volume timeseries 602 based on the set of droplet image timeseries 402.

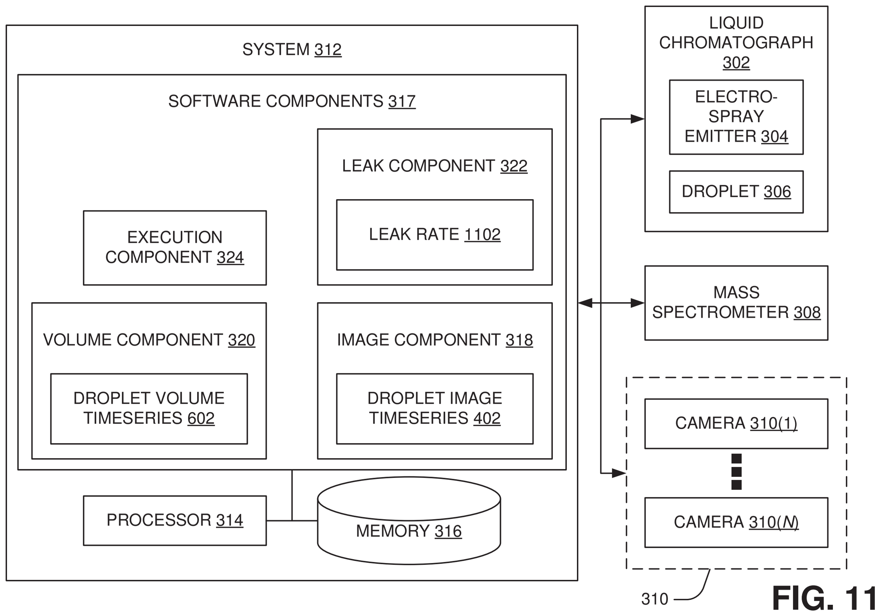

FIG. 11 illustrates a block diagram of an example, non-limiting system including a leak rate that can facilitate non-disruptive and shape-unconstrained leak detection in liquid chromatography in accordance with one or more embodiments described herein.

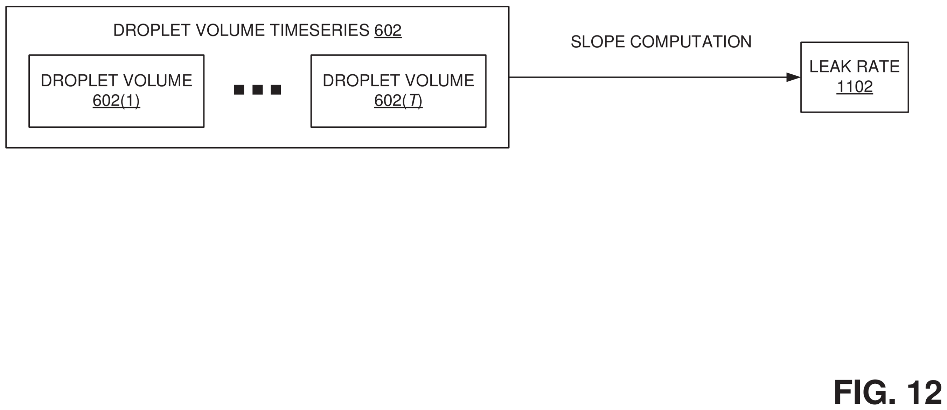

In various embodiments, the leak component 322 can electronically compute or calculate a leak rate 1102, based on the droplet volume timeseries 602. Non-limiting aspects are described with respect to FIGs. 12-13.

First, consider FIG. 12. In various instances, as shown, the leak component 322 can generate the leak rate 1102, based on performing a slope computation on the droplet volume timeseries 602. More specifically, the droplet volume timeseries 602 can, as mentioned above, be considered as indicating or representing the temporal or chronological evolution of the spatial volume of the droplet 306 over the course of ttimesteps. In various cases, the droplet 306 can grow in size, as more and more carrier liquid pools at the tip, exit, or outlet of the electrospray emitter 304. Accordingly, the volume of the droplet 306 can be considered as increasing over the course of ttimesteps. In other words, for any suitable positive integer 1 *< i* ≤ *t,* the droplet volume timeseries 602 can include a droplet volume 602(*i*) that is greater than or equal to a droplet volume 602(i - 1). So, in various aspects, the droplet volume timeseries 602 can be considered as exhibiting a positive temporal slope (e.g., measured in units of volume per unit time), and the leak rate 1102 can be based on that positive temporal slope. As a non-limiting example, the leak rate 1102 can be equal to any suitable instantaneous or average slope exhibited by the droplet volume timeseries 602 (e.g., in situations where the rate at which fluid exiting the electrospray emitter 304 can be considered as a proxy for the rate at which fluid is undesirably or unintentionally leaking out of internal pipes, tubes, or seals of the liquid chromatograph 302). As another non-limiting example, the leak rate 1102 can instead be equal to a difference between: an instantaneous or average slope exhibited by the droplet volume timeseries 602; and a known rate at which fluid is currently or presently being pumped into an entrance or inlet of the liquid chromatograph 302 (e.g., in situations where the rate at which fluid exiting the electrospray emitter 304 is not considered as a proxy for the rate at which fluid is undesirably or unintentionally leaking out of internal pipes, tubes, or seals of the liquid chromatograph 302).

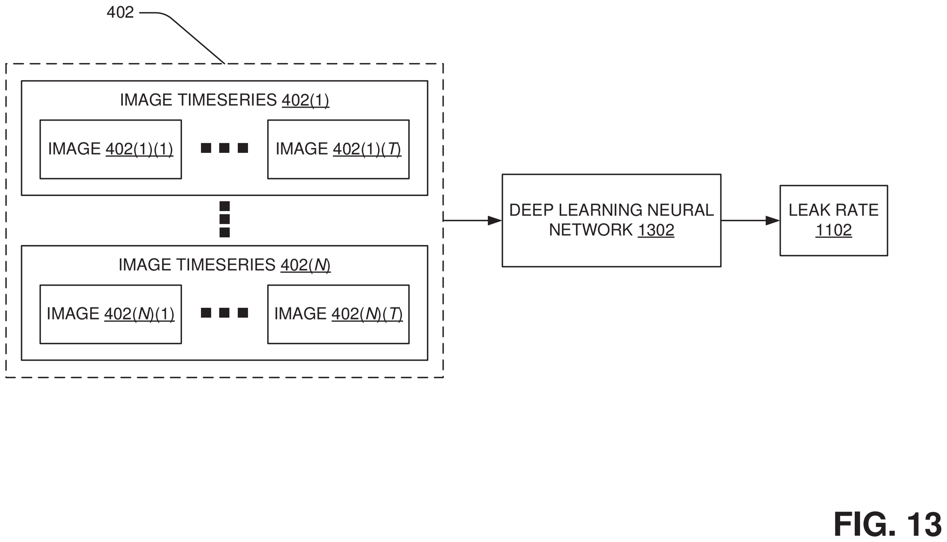

Next, consider FIG. 13. In some embodiments, the volume component 320 (and thus the deep learning neural network 804 or the deep learning neural network 1002) can be omitted. In such situations, the droplet volume timeseries 602 can be not computed. Despite the absence of the droplet volume timeseries 602, the leak component 322 can nevertheless generate or compute the leak rate 1102.

Indeed, the leak component 322 can, in various embodiments, electronically store, electronically maintain, electronically control, or otherwise electronically access a deep learning neural network 1302. In various embodiments, the deep learning neural network 1302 can exhibit any suitable type of deep learning internal architecture. Indeed, in various cases, the deep learning neural network 1302 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. As even another example, any of such input layer, one or more hidden layers, or output layer can be LSTM layers, whose learnable or trainable parameters can be input-state weight matrices or hidden-state weight matrices. As yet another example, any of such input layer, one or more hidden layers, or output layer can be transformer layers, whose learnable or trainable parameters can be single-head or multi-head attention blocks or other weight matrices. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers.

Regardless of the specific internal architecture (e.g., the specific numbers, types, or organizations of layers) that is implemented within the deep learning neural network 1302, the deep learning neural network 1302 can be configured as a regressor that visually estimates or approximates leak rate directly or nearly directly from timeseries of droplet images. In particular, the deep learning neural network 1302 can be configured to receive as input any given set of images that depict a droplet across multiple instants in time and to produce as output a continuously-variable scalar that indicates how quickly or slowly the spatial volume of that droplet appears to be growing over those multiple instants in time. Accordingly, the leak component 322 can, in various aspects, electronically execute the deep learning neural network 1302 on an entirety (or possibly less) of the set of droplet image timeseries 402, so as to yield the leak rate 1102. More specifically, the volume component 320 can concatenate the set of droplet image timeseries 402 together and can feed that concatenation to the input layer of the deep learning neural network 1302. In various instances, that concatenation can complete a forward pass through the one or more hidden layers of the deep learning neural network 1302. In various cases, the output layer of the deep learning neural network 1302 can calculate or compute the leak rate 1102, based on whatever activation maps or feature maps are produced by the one or more hidden layers. However, in other cases, the output layer of the deep learning neural network 1302 can calculate or compute a rate at which the volume of the droplet 306 appears to be changing, and the leak rate 1302 can be equal to a difference between: that calculated or computed rate: and a known rate at which fluid is currently or presently being pumped into an entrance or inlet of the liquid chromatograph 302.

Regardless of whether the leak rate 1102 is derived from the droplet volume timeseries 602 or is instead inferred directly (or nearly directly) by the deep learning neural network 1302, the leak rate 1102 can be a scalar whose value or magnitude indicates how quickly (e.g., expressed in units of mL/second or mL/minute) fluid seems to be undesirably or unintentionally leaking output of internal or interior pipes, tubes, or seals of the liquid chromatograph 302, as manifested or informed by the visual change in size of the droplet 306. In some cases, the leak rate 1102 can be equal to the rate of growth of volume of the droplet 306 across the *t* timesteps captured or monitored by the set of cameras 310. However, in other cases, the leak rate 1102 can instead be equal to the difference between: the rate of growth of volume of the droplet 306 across the *t* timesteps captured or monitored by the set of cameras 310; and a known rate at which fluid is currently or presently being pumped into an entrance of the liquid chromatograph 302.

In various embodiments, the execution component 324 can compare the leak rate 1102 with any suitable threshold value. In response to determining that the leak rate 1102 falls below that threshold value, the execution component 324 can refrain from taking further action with respect to the leak rate 1102. However, in response to determining that the leak rate 1102 exceeds that threshold value, the execution component 324 can instead electronically perform or initiate any suitable type of electronic action. As a non-limiting example, if the leak rate 1102 exceeds the threshold value, the execution component 324 can electronically render, transmit, or otherwise generate any suitable alert notification indicating that the liquid chromatograph 302 is experiencing an excessive leak. In some instances, such alert notification can be in the form of a textual message that is rendered on any suitable computer screen of the liquid chromatograph 302 or of a computerized workstation associated with the liquid chromatograph 302. In other instances, such alert notification can be in the form of an audible message or audible alarm that is played or sounded on any suitable speaker of the liquid chromatograph 302 or of a computerized workstation associated with the liquid chromatograph 302. As another non-limiting example, if the leak rate 1102 exceeds the threshold value, the execution component 324 can electronically schedule a maintenance or servicing visit for the liquid chromatograph 302, such as by automatically populating a service calendar that is associated with the liquid chromatograph 302. As even another non-limiting example, if the leak rate 1102 exceeds the threshold value, the execution component 324 can electronically halt or pause a sample acquisition queue of the liquid chromatograph 302, thereby prohibiting or preventing the liquid chromatograph 302 from scanning a next desired specimen or next desired sample (e.g., since such next scan can be expected to be inaccurate or unreliable given the detection of an excessive leak rate). In any of these situations, the execution component 324 can be considered as directly or indirectly notifying a user or technician that the liquid chromatograph 302 is experiencing more than an acceptable amount of leakage.

Although the herein disclosure has so far described various embodiments in which various neural networks (e.g., the deep learning neural network 804, the deep learning neural network 1002, or the deep learning neural network 1302) are configured to receive image inputs, these are mere non-limiting examples for ease of explanation and illustration. In various aspects, any deep learning neural network described herein (e.g., 804, 1002, 1302) can be configured to receive any suitable number of any suitable types of auxiliary inputs in addition to the above-described image inputs. For example, some auxiliary inputs such as chemical composition of the fluid, temperature, and humidity can affect the rate of evaporation of fluid in the system which can, in turn, impact the rate of change of droplet size or volume over time in the system. In various instances, such auxiliary inputs can be considered as providing additional context regarding the droplet 306, which can help to cause the herein-described neural network outputs to have increased accuracy or increased reliability.

As a non-limiting example, the deep learning neural network 804 can be configured to receive as input not just the set of k-th timestep images 802, but also any of the following: a chemical composition of the droplet 306 (e.g., of whatever carrier liquid that is currently in the liquid chromatograph 302); a temperature of the droplet 306 (e.g., of whatever carrier liquid that is currently in the liquid chromatograph 302); an ambient temperature of the liquid chromatograph 302 (e.g., temperature of environmental air that is currently surrounding an exterior of the liquid chromatograph 302); an ambient pressure of the liquid chromatograph 302 (e.g., pressure of environmental air that is currently surrounding an exterior of the liquid chromatograph 302); or an ambient humidity of the liquid chromatograph 302 (e.g., humidity of environmental air that is currently surrounding an exterior of the liquid chromatograph 302).

As another non-limiting example, the deep learning neural network 1002 can be configured to receive as input not just the set of k-th timestep images 802, but also any of the following: the chemical composition of the droplet 306; the temperature of the droplet 306; the ambient temperature of the liquid chromatograph 302; the ambient pressure of the liquid chromatograph 302; or the ambient humidity of the liquid chromatograph 302.

As yet another non-limiting example, the deep learning neural network 1302 can be configured to receive as input not just the set of droplet image timeseries 402, but also any of the following: the chemical composition of the droplet 306; the temperature of the droplet 306; the ambient temperature of the liquid chromatograph 302; the ambient pressure of the liquid chromatograph 302; or the ambient humidity of the liquid chromatograph 302.

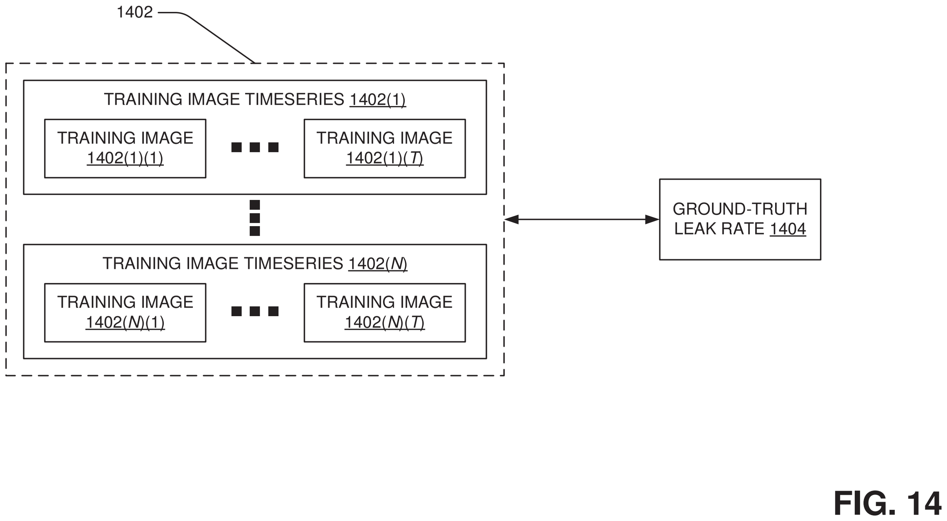

In order for the herein-described leak detection to be reliable, whatever deep learning neural networks (e.g., 804, 1002, 1302) that are implemented can first undergo training. Non-limiting examples of such training are described with respect to FIGs. 14-17.

First, consider FIG. 14. In various embodiments, there can be a set of training image timeseries 1402. In various embodiments, the set of training image timeseries 1402 can have the same format, size, or dimensionality as the set of droplet image timeseries 402. That is, the set of training image timeseries 1402 can have a total of n timeseries, each being a temporal or chronological sequence of images showing a droplet over the course of ttimesteps.

As a non-limiting example, the set of training image timeseries 1402 can include a training image timeseries 1402(1). In various aspects, the training image timeseries 1402(1) can be a temporal or chronological sequence of *t* images that each depicts or illustrates some training droplet from whatever spatial perspective corresponds to the camera 310(1). For instance, the training image timeseries 1402(1) can include a training image 1402(1)(1), which can be an *x-*by-*y* array of pixels that depicts the training droplet from the spatial perspective or orientation of the camera 310(1) at an initial or beginning timestep. Likewise, the training image timeseries 1402(1) can include an image 1402(1)(*t*)*,* which can be an *x*-by-*y* array of pixels that depicts the training droplet from the spatial perspective or orientation of the camera 310(1) at a *t*-th or final timestep.

As another non-limiting example, the set of training image timeseries 1402 can include a training image timeseries 1402(*n*). In various aspects, the training image timeseries 1402(*n*) can be a temporal or chronological sequence of *t* images that each depicts or illustrates some training droplet from whatever spatial perspective corresponds to the camera 310(*n*)*.* For instance, the training image timeseries 1402(*n*) can include a training image 1402(*n*)(1), which can be an *x*-by-*y* array of pixels that depicts the training droplet from the spatial perspective or orientation of the camera 310(*n*) at the initial or beginning timestep. Likewise, the training image timeseries 1402(*n*) can include an image 1402(n)(t), which can be an *x-*by-*y* array of pixels that depicts the training droplet from the spatial perspective or orientation of the camera 310(*n*) at the *t*-th or final timestep.

In various cases, the set of training image timeseries 1402 can correspond to a ground-truth leak rate 1404. In various aspects, the ground-truth leak rate 1404 can be a correct or accurate scalar whose value or magnitude indicates how quickly or slowly the volume of the training droplet that is depicted by the set of training image timeseries 1402 is known or deemed to change.

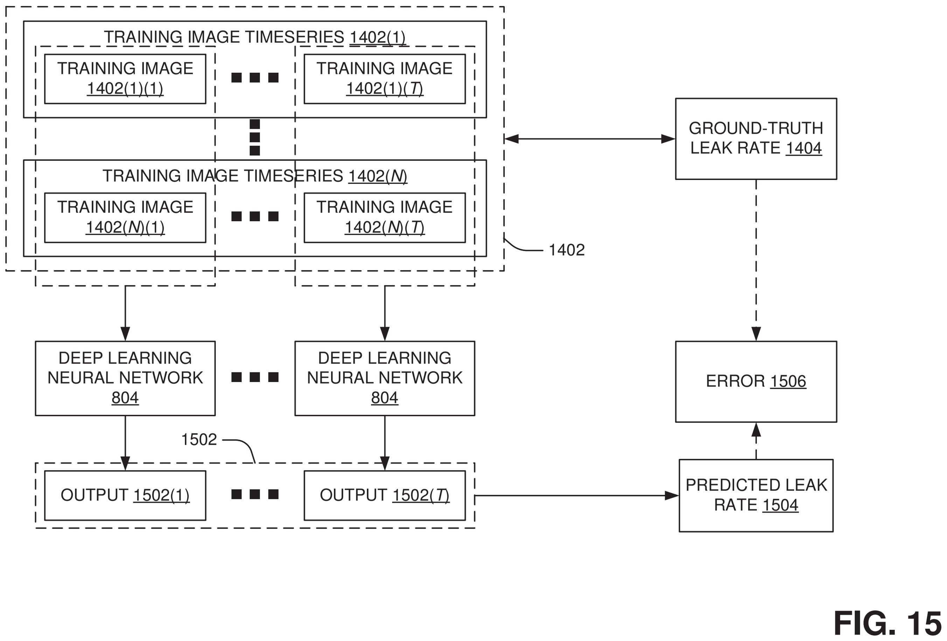

Now, consider FIG. 15, which shows in non-limiting fashion how the deep learning neural network 804 can be trained. In various aspects, prior to beginning training, the trainable internal parameters (e.g., convolutional kernels, weight matrices, bias values) of the deep learning neural network 804 can be initialized in any suitable fashion (e.g., via random initialization) by the system 312.

In various instances, the system 312 can execute the deep learning neural network 804 on respective images from the set of training image timeseries 1402, thereby producing a timeseries of outputs 1502. As a non-limiting example, the system 312 can select from the set of training image timeseries 1402 all images taken at the first or initial timestep (e.g., training image 1402(1)(1) to training image 1402(*n*)(1)) and can concatenate those selected images together. In various cases, the system 312 can feed that concatenation to the input layer of the deep learning neural network 804, that concatenation can complete a forward pass through the one or more hidden layers of the deep learning neural network 804, and the output layer of the deep learning neural network 804 can calculate an output 1502(1) based on activation maps produced by the one or more hidden layers. As another non-limiting example, the system 312 can select from the set of training image timeseries 1402 all images taken at the t-th or final timestep (e.g., training image 1402(1)(t) to training image 1402(n)(t)) and can concatenate those selected images together. In various cases, the system 312 can feed that concatenation to the input layer of the deep learning neural network 804, that concatenation can complete a forward pass through the one or more hidden layers of the deep learning neural network 804, and the output layer of the deep learning neural network 804 can calculate an output 1502(t) based on activation maps produced by the one or more hidden layers. In various instances, the output 1502(1) to the output 1502(*t*) can be considered as collectively forming the timeseries of outputs 1502.

Note that the format, size, or dimensionality of each of the timeseries of outputs 1502 can be dictated by the number, arrangement, sizes, or other characteristics of the neurons, convolutional kernels, attention blocks, or other internal parameters of the output layer (or of any other layers) of the deep learning neural network 804. Accordingly, each of the timeseries of outputs 1502 can be forced to have any desired format, size, or dimensionality, by adding, removing, or otherwise adjusting characteristics of the output layer (or of any other layers) of the deep learning neural network 804.

In various aspects, each of the timeseries of outputs 1502 can be considered as the predicted or inferred droplet volume that the deep learning neural network 804 has computed for a respective timestep of the set of training image timeseries 1402 (e.g., the output 1502(1) can be the predicted or inferred droplet volume that the deep learning neural network 804 has computed for the first or initial timestep; the output 1502(t) can be the predicted or inferred droplet volume that the deep learning neural network 804 has computed for the t-th or final timestep).

In various instances, the system 312 can calculate a predicted leak rate 1504, by performing any suitable slope computation on the timeseries of outputs 1502 (e.g., the predicted leak rate 1504 can be equal to an average temporal slope exhibited by the timeseries of outputs 1502; or the predicted leak rate 1504 can be equal to a difference between that average temporal slope and a known fluid pump input rate). Note that, if the deep learning neural network 804 has so far undergone no or little training, then the predicted leak rate 1504 can be highly inaccurate. In other words, the predicted leak rate 1504 can be very different from the ground-truth leak rate 1404.

In various aspects, the system 312 can compute an error 1506 (e.g., mean absolute error (MAE), mean squared error (MSE), cross-entropy error) between the predicted leak rate 1504 and the ground-truth leak rate 1404. In various instances, the system 312 can incrementally update the trainable internal parameters of the deep learning neural network 804 via backpropagation (e.g., stochastic gradient descent) based on the error 1506.

In various cases, such execution-and-update procedure can be repeated for any suitable number of sets of training image timeseries. This can ultimately cause the trainable internal parameters of the deep learning neural network 804 to become iteratively optimized for accurately inferring instantaneous volumes of depicted droplets. In various aspects, any suitable training batch sizes, any suitable error/loss functions, or any suitable training termination criteria can be utilized during such training.

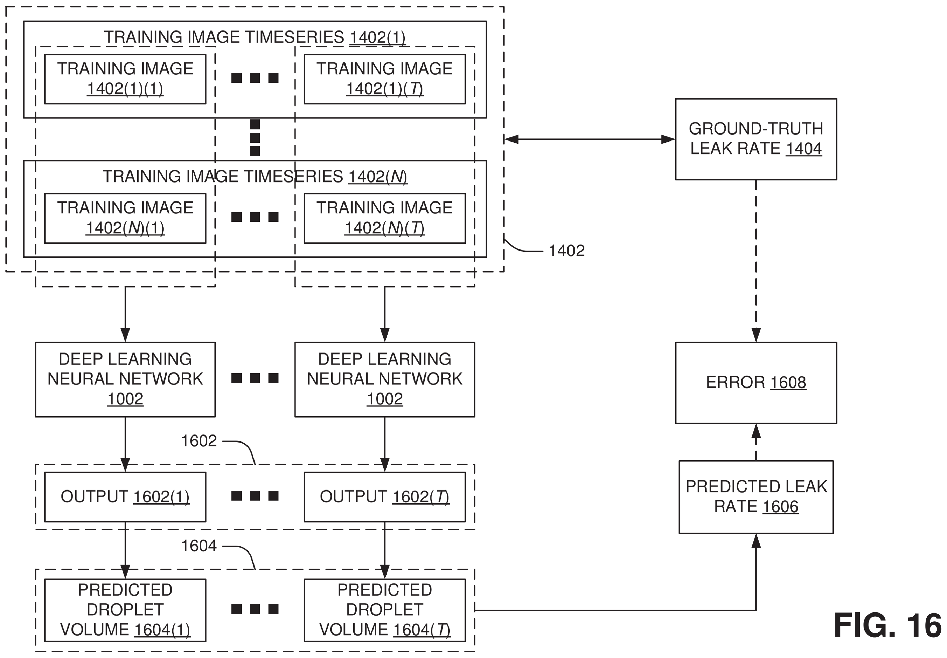

Next, consider FIG. 16, which shows in non-limiting fashion how the deep learning neural network 1002 can be trained. In various aspects, prior to beginning training, the trainable internal parameters (e.g., convolutional kernels, weight matrices, bias values) of the deep learning neural network 1002 can be initialized in any suitable fashion (e.g., via random initialization) by the system 312.

In various instances, the system 312 can execute the deep learning neural network 1002 on respective images from the set of training image timeseries 1402, thereby producing a timeseries of outputs 1602. As a non-limiting example, the system 312 can select from the set of training image timeseries 1402 all images taken at the first or initial timestep (e.g., training image 1402(1)(1) to training image 1402(n)(1)) and can concatenate those selected images together. In various cases, the system 312 can feed that concatenation to the input layer of the deep learning neural network 1002, that concatenation can complete a forward pass through the one or more hidden layers of the deep learning neural network 1002, and the output layer of the deep learning neural network 1002 can calculate an output 1602(1) based on activation maps produced by the one or more hidden layers. As another non-limiting example, the system 312 can select from the set of training image timeseries 1402 all images taken at the t-th or final timestep (e.g., training image 1402(1)(t) to training image 1402(n)(t)) and can concatenate those selected images together. In various cases, the system 312 can feed that concatenation to the input layer of the deep learning neural network 1002, that concatenation can complete a forward pass through the one or more hidden layers of the deep learning neural network 1002, and the output layer of the deep learning neural network 1002 can calculate an output 1602(t) based on activation maps produced by the one or more hidden layers. In various instances, the output 1602(1) to the output 1602(*t*) can be considered as collectively forming the timeseries of outputs 1602.

Note that the format, size, or dimensionality of each of the timeseries of outputs 1602 can be dictated by the number, arrangement, sizes, or other characteristics of the neurons, convolutional kernels, attention blocks, or other internal parameters of the output layer (or of any other layers) of the deep learning neural network 1002. Accordingly, each of the timeseries of outputs 1602 can be forced to have any desired format, size, or dimensionality, by adding, removing, or otherwise adjusting characteristics of the output layer (or of any other layers) of the deep learning neural network 1002.

In various aspects, each of the timeseries of outputs 1602 can be considered as the predicted or inferred droplet pixel count that the deep learning neural network 1002 has computed for a respective timestep of the set of training image timeseries 1402 (e.g., the output 1602(1) can be the predicted or inferred number of droplet-consumed cubic pixels that the deep learning neural network 1002 has computed for the first or initial timestep; the output 1602(t) can be the predicted or inferred number of droplet-consumed cubic pixels that the deep learning neural network 1002 has computed for the t-th or final timestep).

In various instances, the system 312 can convert the timeseries of outputs 1602 into a timeseries of predicted droplet volumes 1604, via application of the pixel-to-volume conversion factor 1004. As a non-limiting example, multiplying the output 1602(1) by the pixel-to-volume conversion factor 1004 can yield a predicted droplet volume 1604(1). As another non-limiting example, multiplying the output 1602(t) by the pixel-to-volume conversion factor 1004 can yield a predicted droplet volume 1604(t). In various instances, the predicted droplet volume 1604(1) to the predicted droplet volume 1604(*t*) can be considered as collectively forming the timeseries of predicted droplet volumes 1604.

In various instances, the system 312 can calculate a predicted leak rate 1606, by performing any suitable slope computation on the timeseries of predicted droplet volumes 1604 (e.g., the predicted leak rate 1606 can be equal to an average temporal slope exhibited by the timeseries of predicted droplet volumes 1604; or the predicted leak rate 1606 can be equal to a difference between that average temporal slope and a known fluid pump input rate). Note that, if the deep learning neural network 1002 has so far undergone no or little training, then the predicted leak rate 1606 can be highly inaccurate. In other words, the predicted leak rate 1606 can be very different from the ground-truth leak rate 1404.

In various aspects, the system 312 can compute an error 1608 (e.g., MAE, MSE, cross-entropy error) between the predicted leak rate 1606 and the ground-truth leak rate 1404. In various instances, the system 312 can incrementally update the trainable internal parameters of the deep learning neural network 1002 via backpropagation (e.g., stochastic gradient descent) based on the error 1608.

In various cases, such execution-and-update procedure can be repeated for any suitable number of sets of training image timeseries. This can ultimately cause the trainable internal parameters of the deep learning neural network 1002 to become iteratively optimized for accurately inferring instantaneous pixel counts of depicted droplets. In various aspects, any suitable training batch sizes, any suitable error/loss functions, or any suitable training termination criteria can be utilized during such training.

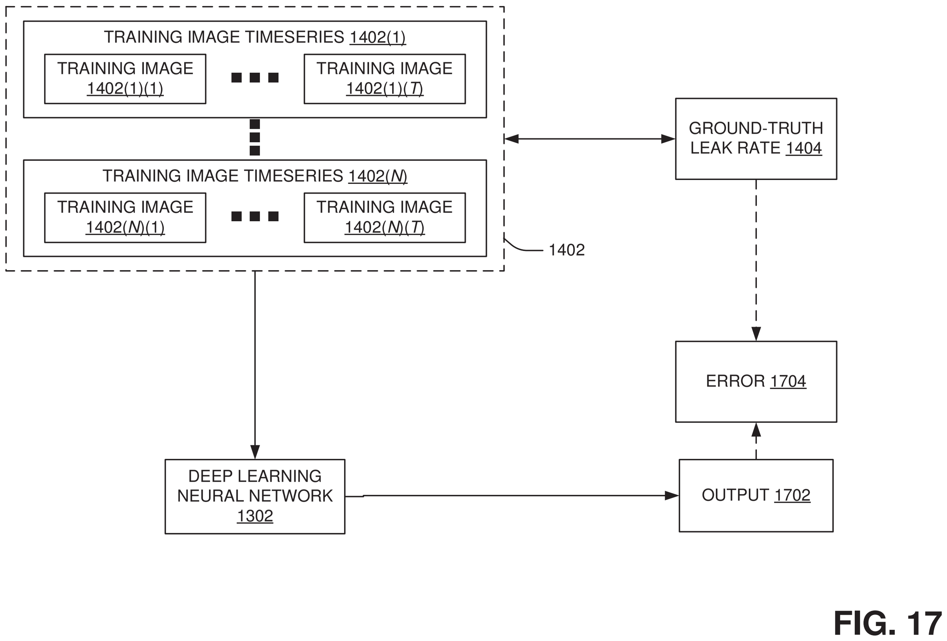

Now, consider FIG. 17, which shows in non-limiting fashion how the deep learning neural network 1302 can be trained. In various aspects, prior to beginning training, the trainable internal parameters (e.g., convolutional kernels, weight matrices, bias values) of the deep learning neural network 1302 can be initialized in any suitable fashion (e.g., via random initialization) by the system 312.

In various instances, the system 312 can execute the deep learning neural network 1002 on an entirety of the set of training image timeseries 1402, thereby producing an output 1702. More specifically, the system 312 can concatenate the set of training image timeseries 1402 together and can feed that concatenation to the input layer of the deep learning neural network 1302. In various aspects, that concatenation can complete a forward pass through the one or more hidden layers of the deep learning neural network 1302, and the output layer of the deep learning neural network 1302 can calculate an output 1702 based on activation maps produced by the one or more hidden layers.

Note that the format, size, or dimensionality of the output 1702 can be dictated by the number, arrangement, sizes, or other characteristics of the neurons, convolutional kernels, attention blocks, or other internal parameters of the output layer (or of any other layers) of the deep learning neural network 1302. Accordingly, the output 1702 can be forced to have any desired format, size, or dimensionality, by adding, removing, or otherwise adjusting characteristics of the output layer (or of any other layers) of the deep learning neural network 1302.

In various aspects, the output 1702 can be considered as the predicted or inferred leak rate that the deep learning neural network 1302 has computed for the set of training image timeseries 1402. In other cases, the output 1702 can instead be considered as the predicted or inferred rate of volume growth of whatever droplet is depicted in the set of training image timeseries 1402, and the leak rate can be equal to a difference between the output 1702 and a known fluid pump input rate. Note that, if the deep learning neural network 1302 has so far undergone no or little training, then the output 1702 can be highly inaccurate.

In various aspects, the system 312 can compute an error 1704 based on the output 1702 and the ground-truth leak rate 1404. In situations where the output 1702 is the predicted or inferred leak rate, then the error 1704 can be equal to an MAE, MSE, or cross-entropy error between the output 1702 and the ground-truth leak rate 1404. On the other hand, in situations where the output 1702 is the rate of volume growth of the depicted droplet, the error 1704 can be equal to an MAE, MSE, or cross-entropy error between: the ground-truth leak rate 1404; and a difference computed between the output 1702 and a known fluid pump input rate. In any case, the system 312 can incrementally update the trainable internal parameters of the deep learning neural network 1302 via backpropagation (e.g., stochastic gradient descent) based on the error 1704.

In various cases, such execution-and-update procedure can be repeated for any suitable number of sets of training image timeseries. This can ultimately cause the trainable internal parameters of the deep learning neural network 1302 to become iteratively optimized for accurately inferring leak rates from timeseries of depicted droplets. In various aspects, any suitable training batch sizes, any suitable error/loss functions, or any suitable training termination criteria can be utilized during such training.

Note that none of the above-described training procedures rely upon or otherwise enforce specific geometric constraints with respect to depicted droplets. For instance, none of such training requires that droplets depicted in training images have a threshold level of roundness. Moreover, none of such training involves explicitly computing ellipticities or radii of droplets depicted in training images. Accordingly, the herein-described neural networks (e.g., 804, 1002, 1302) can be considered as learning how to perform their respective inferencing tasks (e.g., instantaneous volume prediction, instantaneous pixel-count prediction, direct leak rate prediction) even for droplets that do not satisfy such geometric constraints. In other words, the herein-described neural networks can be considered as being agnostic to droplet shape.

Although the herein disclosure mainly describes various neural networks (e.g., 804, 1002, 1302) as being trained in supervised fashion, this is a mere non-limiting example for ease of explanation and illustration. In various embodiments, any other suitable training paradigms can be used to train such neural networks, such as unsupervised training, semi-supervised training, or reinforcement learning, any of which may be federated or unfederated.

According to various examples taught herein, training data for the neural networks (e.g., 804, 1002, 1302) can include auxiliary parameters in addition to the training images 1402 that characterize sample or environmental features of the system depicted in the training images 1402. For example, auxiliary parameters can include chemical composition or temperature of the droplets appearing in the training images or ambient temperature, pressure, or humidity of the chromatograph that produced droplets appearing in the images. Such auxiliary parameters can impact droplet size, volume, or growth such as by affecting evaporation rate. Thus, particular neural networks can be trained to exhibit greater specificity when analyzing images having droplets under particular conditions (such as particular chemical compositions). When preparing to execute a deep learning neural network on images as taught herein, some examples of systems, devices, and methods can select the deep learning neural network that has been trained on specific auxiliary parameters that match or are consistent with auxiliary parameters that are provided to the system or determined by the system.

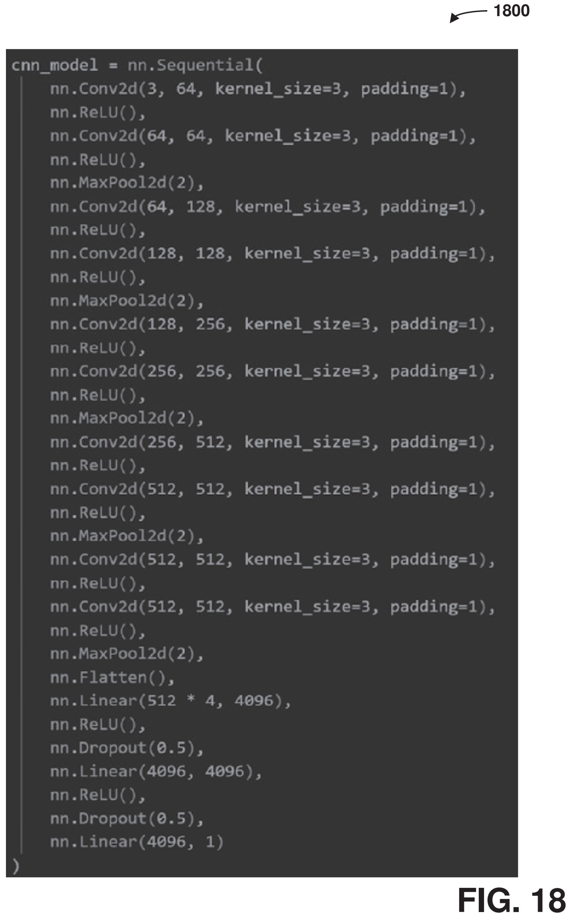

FIGs. 18-24 illustrate example, non-limiting experimental results in accordance with one or more embodiments described herein.

FIG. 18 shows a screenshot 1800. The screenshot 1800 indicates a specific, though non-limiting, deep learning internal architecture that the inventors of various embodiments described herein reduced to practice for the deep learning neural network 804. Those of ordinary skill in the art will understand the syntax or short-hand notation shown in the screenshot 1800 (e.g., "Conv2d" indicates a two-dimensional convolutional layer with structure specified in succeeding parentheses; "ReLU" indicates a rectified linear unit layer with structure specified in succeeding parentheses; "MaxPool2d" indicates a two-dimensional pooling layer with structure specified in succeeding parentheses; "Flatten" indicates a flattening operation; "Linear" indicates a fully-connected dense or feed-forward layer with structure specified in succeeding parentheses; "Dropout" indicates a dropout layer with structure specified in succeeding parentheses).

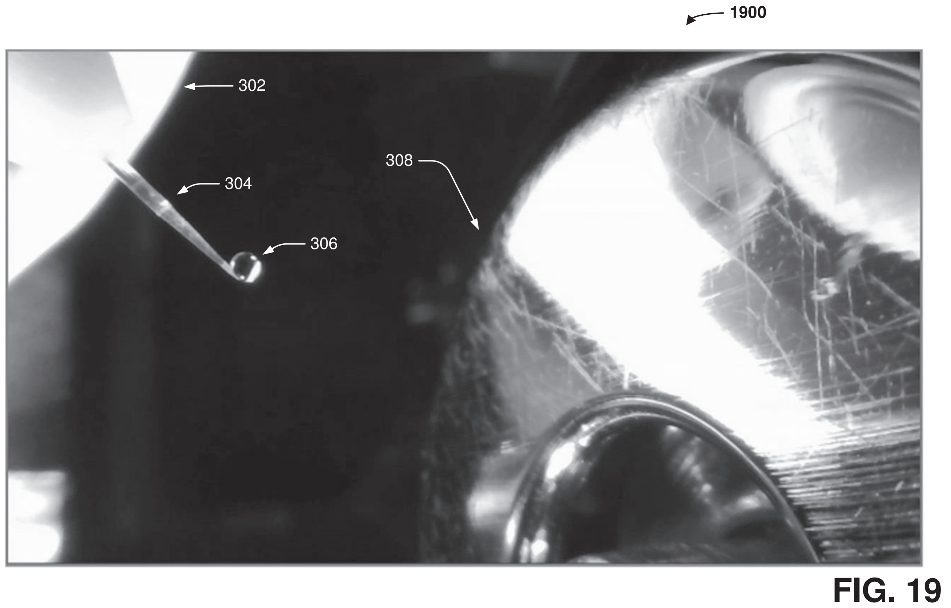

FIG. 19 shows a photograph 1900. The photograph 1900 is a real-world example of a side-view image captured by one of the set of cameras 310, showing how the liquid chromatograph 302, the electrospray emitter 304, the droplet 306, and the mass spectrometer 308 can physically relate to each other.

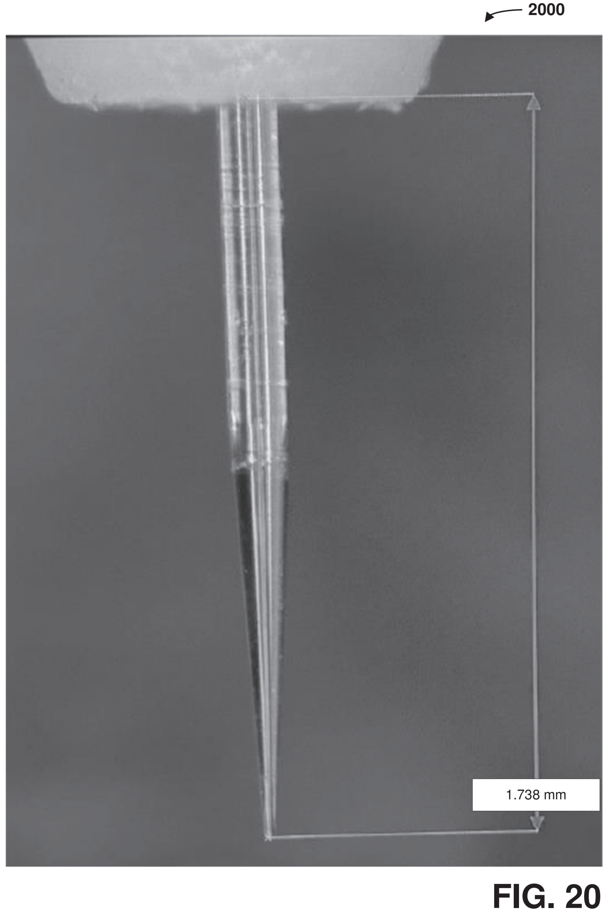

FIGs. 20-23 illustrate non-limiting photographs regarding computation of spatial resolution.

FIG. 20 shows a photograph 2000. The photograph 2000 depicts a zoomed-view of the electrospray emitter 304. As indicated in FIG. 20, a non-limiting real-world length of the electrospray emitter 304 was known to be 1.738 mm.

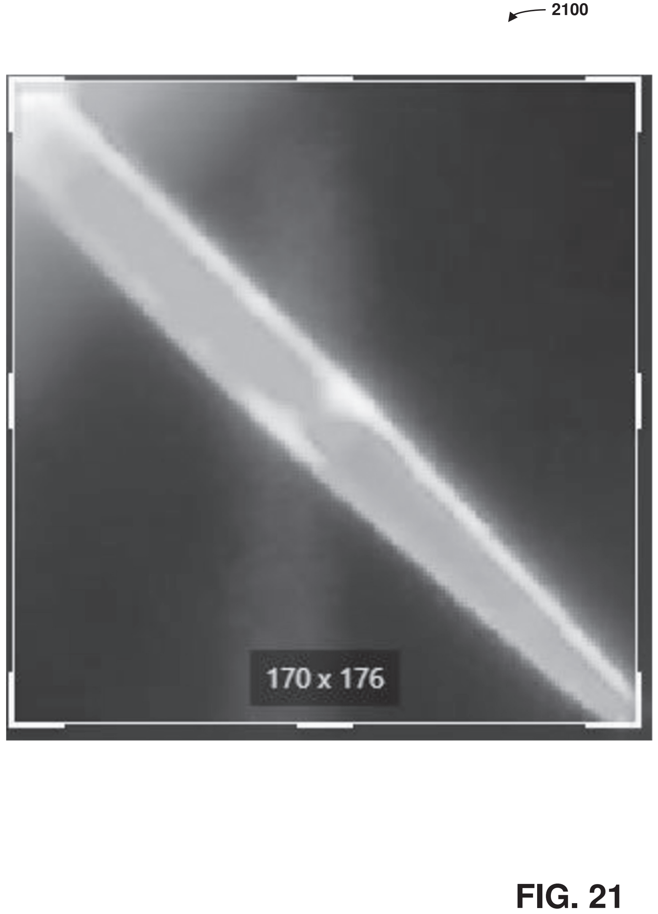

FIG. 21 shows a photograph 2100 depicting the electrospray emitter 304 and that was captured by one of the set of cameras 310. As indicated in FIG. 21, the photograph 2100 measures 170 pixels by 176 pixels. Additionally, as shown in FIG. 21, the diagonal of the photograph 2100 overlays the length of the electrospray emitter 304. Accordingly, because the electrospray emitter 304 has (in this non-limiting example) a real-world length of 1.738 mm, and because the diagonal of the photograph 2100 measures about 245 pixels (e.g., derived via Pythagorean theorem), the spatial resolution of whatever camera that captured the photograph 2100 can be considered as $\frac{1.738 mm}{245 pixels} \approx 7.1 μm / pixel$.

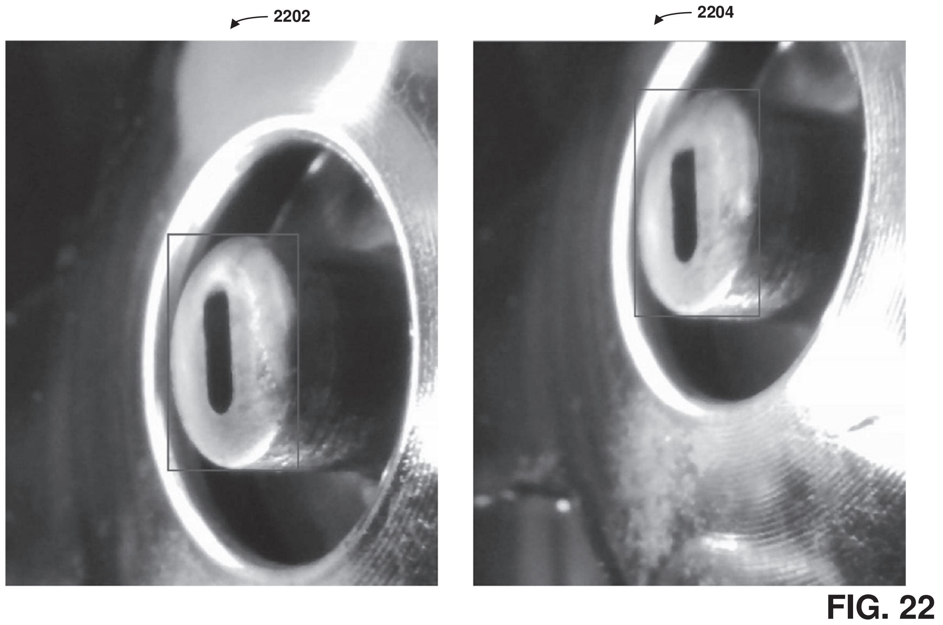

FIG. 22 shows a photograph 2202 and a photograph 2204. The photograph 2202 illustrates an inlet of the mass spectrometer 308 before that inlet was physically shifted upward by an actuatable motor. In contrast, the photograph 2204 illustrates the inlet of the mass spectrometer 308 after that inlet was physically shifted upward by the actuatable motor. As can be seen, the inlet can be considered as having been shifted upward by a certain number of pixels (e.g., as having undergone an intra-image displacement). If the real-world, shift-induced displacement of the inlet is known or measured, and if the number of pixels by which the inlet moved upward is counted, then the spatial resolution of whichever camera captured the photographs 2202 and 2204 can be computed (e.g., as the ratio between that real-world displacement and the counted number of pixels).

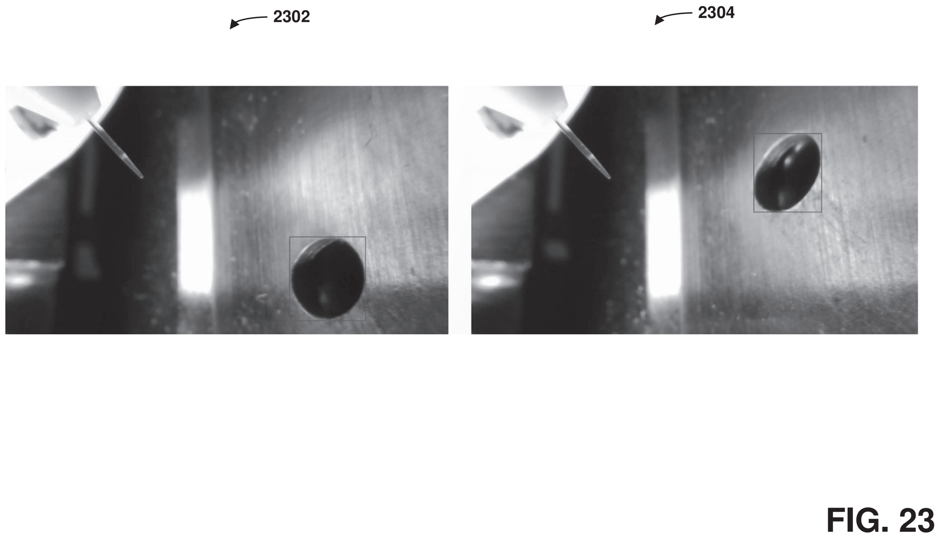

FIG. 23 shows a photograph 2302 and a photograph 2304. The photograph 2302 illustrates a field asymmetric ion mobility spectrometry (FAIMS) orifice of the mass spectrometer 308 before the FAIMS orifice was physically rotated upward by an actuatable motor. In contrast, the photograph 2304 illustrates the FAIMS orifice of the mass spectrometer 308 after the FAIMS orifice was physically rotated upward by the actuatable motor. As can be seen, the FAIMS orifice can be considered as having been moved upward by a certain number of pixels. If the real-world, rotation-induced displacement of the FAIMS orifice is known or measured, and if the number of pixels by which the FAIMS orifice moved upward is counted, then the spatial resolution of whichever camera captured the photographs 2302 and 2304 can be computed (e.g., as the ratio between that real-world displacement and the counted number of pixels).

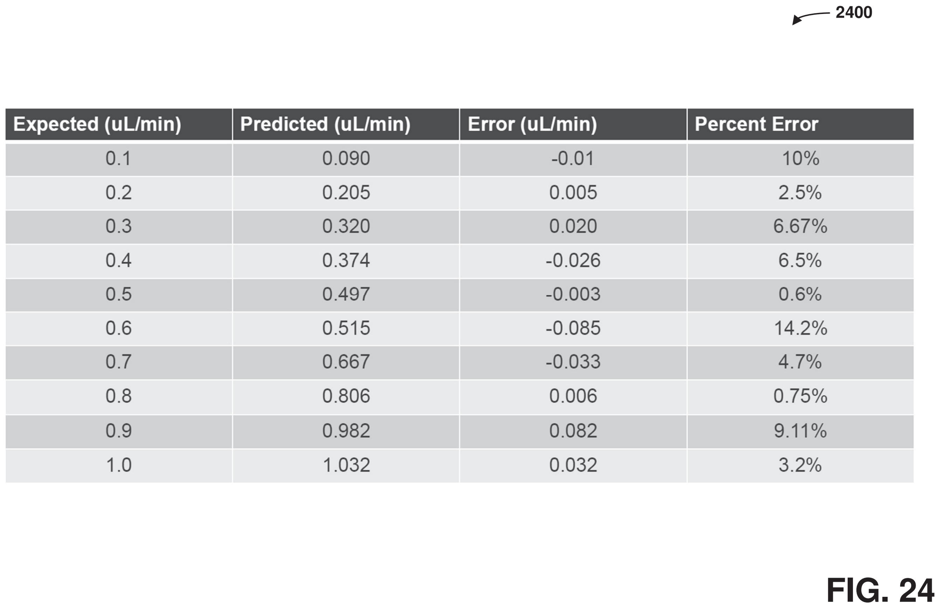

FIG. 24 shows a table 2400. The table 2400 indicates various experimental results obtained by the present inventors. In particular, the present inventors reduced to practice an embodiment implementing the deep learning neural network 804, and the table 2400 shows how well that embodiment was able to predict leak rates. As shown, the percentage error achieved by such embodiment is quite low. This helps to demonstrate the technical benefit or efficacy of non-disruptive and shape-unconstrained leak estimation as described herein.

In various instances, machine learning algorithms or models can be implemented in any suitable way to facilitate any suitable aspects described herein. To facilitate some of the above-described machine learning aspects of various embodiments, consider the following discussion of artificial intelligence (Al). Various embodiments described herein can employ artificial intelligence to facilitate automating one or more features or functionalities. The components can employ various Al-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, z = (z₁, z₂, z₃, z₄, *zₙ*)*,* to a confidence that the input belongs to a class, as by f(z) *= confidence*(*class*)*.* Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naïve Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

In order to provide additional context for various embodiments described herein, FIG. 25 and the following discussion are intended to provide a brief, general description of a suitable computing environment 2500 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 25, the example environment 2500 for implementing various embodiments of the aspects described herein includes a computer 2502, the computer 2502 including a processing unit 2504, a system memory 2506 and a system bus 2508. The system bus 2508 couples system components including, but not limited to, the system memory 2506 to the processing unit 2504. The processing unit 2504 can be any of various commercially available processors. Dual microprocessors and other multi-processor architectures can also be employed as the processing unit 2504.

The system bus 2508 can be any of several types of bus structure that can further interconnect to a memory bus (with or without a memory controller), a peripheral bus, and a local bus using any of a variety of commercially available bus architectures. The system memory 2506 includes ROM 2510 and RAM 2512. A basic input/output system (BIOS) can be stored in a non-volatile memory such as ROM, erasable programmable read only memory (EPROM), EEPROM, which BIOS contains the basic routines that help to transfer information between elements within the computer 2502, such as during startup. The RAM 2512 can also include a high-speed RAM such as static RAM for caching data.

The computer 2502 further includes an internal hard disk drive (HDD) 2514 (e.g., EIDE, SATA), one or more external storage devices 2516 (e.g., a magnetic floppy disk drive (FDD) 2516, a memory stick or flash drive reader, a memory card reader, etc.) and a drive 2520, e.g., such as a solid state drive, an optical disk drive, which can read or write from a disk 2522, such as a CD-ROM disc, a DVD, a BD, etc. Alternatively, where a solid state drive is involved, disk 2522 would not be included, unless separate. While the internal HDD 2514 is illustrated as located within the computer 2502, the internal HDD 2514 can also be configured for external use in a suitable chassis (not shown). Additionally, while not shown in environment 2500, a solid state drive (SSD) could be used in addition to, or in place of, an HDD 2514. The HDD 2514, external storage device(s) 2516 and drive 2520 can be connected to the system bus 2508 by an HDD interface 2524, an external storage interface 2526 and a drive interface 2528, respectively. The interface 2524 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 2502, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 2512, including an operating system 2530, one or more application programs 2532, other program modules 2534 and program data 2536. All or portions of the operating system, applications, modules, or data can also be cached in the RAM 2512. The systems and methods described herein can be implemented utilizing various commercially available operating systems or combinations of operating systems.

Computer 2502 can optionally comprise emulation technologies. For example, a hypervisor (not shown) or other intermediary can emulate a hardware environment for operating system 2530, and the emulated hardware can optionally be different from the hardware illustrated in FIG. 25. In such an embodiment, operating system 2530 can comprise one virtual machine (VM) of multiple VMs hosted at computer 2502. Furthermore, operating system 2530 can provide runtime environments, such as the Java runtime environment or the .NET framework, for applications 2532. Runtime environments are consistent execution environments that allow applications 2532 to run on any operating system that includes the runtime environment. Similarly, operating system 2530 can support containers, and applications 2532 can be in the form of containers, which are lightweight, standalone, executable packages of software that include, e.g., code, runtime, system tools, system libraries and settings for an application.

Further, computer 2502 can be enable with a security module, such as a trusted processing module (TPM). For instance with a TPM, boot components hash next in time boot components, and wait for a match of results to secured values, before loading a next boot component. This process can take place at any layer in the code execution stack of computer 2502, e.g., applied at the application execution level or at the operating system (OS) kernel level, thereby enabling security at any level of code execution.

A user can enter commands and information into the computer 2502 through one or more wired/wireless input devices, e.g., a keyboard 2538, a touch screen 2540, and a pointing device, such as a mouse 2542. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 2504 through an input device interface 2544 that can be coupled to the system bus 2508, but can be connected by other interfaces, such as a parallel port, an IEEE 1394 serial port, a game port, a USB port, an IR interface, a BLUETOOTH^{®} interface, etc.

A monitor 2546 or other type of display device can be also connected to the system bus 2508 via an interface, such as a video adapter 2548. In addition to the monitor 2546, a computer typically includes other peripheral output devices (not shown), such as speakers, printers, etc.

The computer 2502 can operate in a networked environment using logical connections via wired or wireless communications to one or more remote computers, such as a remote computer(s) 2550. The remote computer(s) 2550 can be a workstation, a server computer, a router, a personal computer, portable computer, microprocessor-based entertainment appliance, a peer device or other common network node, and typically includes many or all of the elements described relative to the computer 2502, although, for purposes of brevity, only a memory/storage device 2552 is illustrated. The logical connections depicted include wired/wireless connectivity to a local area network (LAN) 2554 or larger networks, e.g., a wide area network (WAN) 2556. Such LAN and WAN networking environments are commonplace in offices and companies, and facilitate enterprise-wide computer networks, such as intranets, all of which can connect to a global communications network, e.g., the Internet.

When used in a LAN networking environment, the computer 2502 can be connected to the local network 2554 through a wired or wireless communication network interface or adapter 2558. The adapter 2558 can facilitate wired or wireless communication to the LAN 2554, which can also include a wireless access point (AP) disposed thereon for communicating with the adapter 2558 in a wireless mode.

When used in a WAN networking environment, the computer 2502 can include a modem 2560 or can be connected to a communications server on the WAN 2556 via other means for establishing communications over the WAN 2556, such as by way of the Internet. The modem 2560, which can be internal or external and a wired or wireless device, can be connected to the system bus 2508 via the input device interface 2544. In a networked environment, program modules depicted relative to the computer 2502 or portions thereof, can be stored in the remote memory/storage device 2552. It will be appreciated that the network connections shown are example and other means of establishing a communications link between the computers can be used.

When used in either a LAN or WAN networking environment, the computer 2502 can access cloud storage systems or other network-based storage systems in addition to, or in place of, external storage devices 2516 as described above, such as but not limited to a network virtual machine providing one or more aspects of storage or processing of information. Generally, a connection between the computer 2502 and a cloud storage system can be established over a LAN 2554 or WAN 2556 e.g., by the adapter 2558 or modem 2560, respectively. Upon connecting the computer 2502 to an associated cloud storage system, the external storage interface 2526 can, with the aid of the adapter 2558 or modem 2560, manage storage provided by the cloud storage system as it would other types of external storage. For instance, the external storage interface 2526 can be configured to provide access to cloud storage sources as if those sources were physically connected to the computer 2502.

The computer 2502 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 26 is a schematic block diagram of a sample computing environment 2600 with which the disclosed subject matter can interact. The sample computing environment 2600 includes one or more client(s) 2610. The client(s) 2610 can be hardware or software (e.g., threads, processes, computing devices). The sample computing environment 2600 also includes one or more server(s) 2630. The server(s) 2630 can also be hardware or software (e.g., threads, processes, computing devices). The servers 2630 can house threads to perform transformations by employing one or more embodiments as described herein, for example. One possible communication between a client 2610 and a server 2630 can be in the form of a data packet adapted to be transmitted between two or more computer processes. The sample computing environment 2600 includes a communication framework 2650 that can be employed to facilitate communications between the client(s) 2610 and the server(s) 2630. The client(s) 2610 are operably connected to one or more client data store(s) 2620 that can be employed to store information local to the client(s) 2610. Similarly, the server(s) 2630 are operably connected to one or more server data store(s) 2640 that can be employed to store information local to the servers 2630.

Various embodiments may be a system, a method, an apparatus or a computer program product at any possible technical detail level of integration. The computer program product can include a computer readable storage medium (or media) having computer readable program instructions thereon for causing a processor to carry out aspects of various embodiments. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of various embodiments can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform various aspects.

Various aspects are described herein with reference to flowchart illustrations or block diagrams of methods, apparatus (systems), and computer program products according to various embodiments. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that various aspects can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects are described in the following examples.

EXAMPLE 1: A system can comprise a processor that can execute computer-executable components stored in a non-transitory computer-readable memory, wherein the computer-executable components can comprise: an image component that can capture, via at least one camera, at least one timeseries of images depicting an electrospray emitter of a chromatograph; a volume component that can execute a deep learning neural network on respective images of the at least one timeseries of images, wherein respective outputs of the deep learning neural network form a timeseries of volumes of a droplet that is depicted in the at least one timeseries of images as forming on the electrospray emitter; and a leak component that can determine a leak rate afflicting the chromatograph, based on the timeseries of volumes.

EXAMPLE 2: The system of any preceding example can be implemented, wherein the at least one timeseries of images can include at least one first image showing the droplet at a first timestep, wherein the timeseries of volumes can include a first volume of the droplet at the first timestep, wherein the deep learning neural network can receive as input the at least one first image, wherein the at least one first image can complete a forward pass through the deep learning neural network, and wherein the deep learning neural network can produce as output the first volume based on the forward pass.

EXAMPLE 3: The system of any preceding example can be implemented, wherein the at least one camera can include a plurality of cameras that respectively view the electrospray emitter from a plurality of perspectives, such that the at least one first image can include a plurality of first images, each of which can depict the droplet at the first timestep from a respective one of the plurality of perspectives.

EXAMPLE 4: The system of any preceding example can be implemented, wherein the plurality of first images can include a top-view image of the electrospray emitter, a bottom-view image of the electrospray emitter, a side-view image of the electrospray emitter, a front-view image of the electrospray emitter, or a back-view image of the electrospray emitter.

EXAMPLE 5: The system of any preceding example can be implemented, wherein the deep learning neural network can receive one or more auxiliary inputs along with the at least one first image, wherein the one or more auxiliary inputs can include: a chemical composition of the droplet; a temperature of the droplet; an ambient temperature associated with the chromatograph; ambient humidity associated with the chromatograph; or an ambient pressure associated with the chromatograph.

EXAMPLE 6: The system of any preceding example can be implemented, wherein the leak rate can be based on an average slope exhibited by the timeseries of volumes.

EXAMPLE 7: The system of any preceding example can be implemented, wherein the computer-executable components can comprise: an execution component that can generate an electronic alert notification in response to the leak rate exceeding a threshold.

EXAMPLE 8: The system of any preceding example can be implemented, wherein the computer-executable components can comprise: an execution component that can schedule a maintenance visit for the chromatograph in response to the leak rate exceeding a threshold.

In various embodiments, any combination or combinations of examples 1-8 can be implemented.

EXAMPLE 9: A computer-implemented method can comprise: capturing, by a device operatively coupled to a processor and via at least one camera, at least one timeseries of images depicting an electrospray emitter of a chromatograph; executing, by the device, a deep learning neural network on respective images of the at least one timeseries of images, wherein respective outputs of the deep learning neural network form a timeseries of pixel counts occupied by a droplet that is depicted in the at least one timeseries of images as forming on the electrospray emitter; and determining, by the device, a leak rate afflicting the chromatograph, based on the timeseries of pixel counts.

EXAMPLE 10: The computer-implemented method of any preceding example can be implemented, wherein the at least one timeseries of images can include at least one first image showing the droplet at a first timestep, wherein the timeseries of pixel counts can include a first pixel count occupied by the droplet at the first timestep, wherein the deep learning neural network can receive as input the at least one first image, wherein the at least one first image can complete a forward pass through the deep learning neural network, and wherein the deep learning neural network can produce as output the first pixel count based on the forward pass.

EXAMPLE 11: The computer-implemented method of any preceding example can be implemented, wherein the at least one camera can include a plurality of cameras that respectively view the electrospray emitter from a plurality of perspectives, such that the at least one first image can include a plurality of first images, each of which can depict the droplet at the first timestep from a respective one of the plurality of perspectives.

EXAMPLE 12: The computer-implemented method of any preceding example can be implemented, wherein the plurality of first images can include a top-view image of the electrospray emitter, a bottom-view image of the electrospray emitter, a side-view image of the electrospray emitter, a front-view image of the electrospray emitter, or a back-view image of the electrospray emitter.

EXAMPLE 13: The computer-implemented method of any preceding example can be implemented, wherein the deep learning neural network can receive one or more auxiliary inputs along with the at least one first image, wherein the one or more auxiliary inputs can include: a chemical composition of the droplet; a temperature of the droplet; an ambient temperature associated with the chromatograph; ambient humidity associated with the chromatograph; or an ambient pressure associated with the chromatograph.

EXAMPLE 14: The computer-implemented method of any preceding example can be implemented, further comprising: converting, by the device, the timeseries of pixel counts into a timeseries of droplet volumes, by leveraging a pixel-to-volume conversion factor associated with the chromatograph, and wherein the leak rate can be based on an average slope exhibited by the timeseries of droplet volumes.

EXAMPLE 15: The computer-implemented method of any preceding example can be implemented, wherein a constituent piece of hardware of the chromatograph or of a mass spectrometer to which the chromatograph is coupled can be viewable by the at least one camera, wherein the constituent piece of hardware can have a known physical size, and further comprising: computing, by the device, the pixel-to-volume conversion factor based on the known physical size and based on how many pixels the at least one camera uses to depict the constituent piece of hardware.

EXAMPLE 16: The computer-implemented method of any preceding example can be implemented, wherein a constituent piece of hardware of the chromatograph or of a mass spectrometer to which the chromatograph is coupled can be viewable by the at least one camera and can be coupled to an actuatable motor, and further comprising: shifting, by the device and via the actuatable motor, the constituent piece of hardware by a known physical distance; and computing, by the device, the pixel-to-volume conversion factor based on the known physical distance and based on an intra-image displacement of the constituent piece of hardware as depicted by the at least one camera.

EXAMPLE 17: The computer-implemented method of any preceding example can be implemented, further comprising: generating, by the device, an electronic alert notification in response to the leak rate exceeding a threshold.

EXAMPLE 18: The computer-implemented method of any preceding example can be implemented, further comprising: scheduling, by the device, a maintenance visit for the chromatograph in response to the leak rate exceeding a threshold.

In various embodiments, any combination or combinations of examples 9-18 can be implemented.

EXAMPLE 19: A computer program product for facilitating non-disruptive and shape-unconstrained leak detection in liquid chromatography can comprise a non-transitory computer-readable memory having program instructions embodied therewith. In various aspects, the program instructions can be executable by a processor to cause the processor to: capture, via at least one camera, at least one timeseries of images depicting an electrospray emitter of a chromatograph; and determine a leak rate afflicting the chromatograph, based on executing a deep learning neural network on the at least one timeseries of images, wherein the at least one timeseries of images can be fed as input to the deep learning neural network, wherein the at least one timeseries of images can complete a forward pass through the deep learning neural network, and wherein the deep learning neural network can produce as output the leak rate.

EXAMPLE 20: The computer program product of any preceding example can be implemented, wherein the program instructions can be further executable to cause the processor to: generate an electronic alert notification in response to the leak rate exceeding a threshold; schedule a maintenance visit for the chromatograph in response to the leak rate exceeding the threshold; or halt an acquisition queue of the chromatograph in response to the leak rate exceeding the threshold.

In various embodiments, any combination or combinations of examples 19-20 can be implemented.

In various embodiments, any combination or combinations of examples 1-20 can be implemented.

## Claims

1. A system, comprising:
a processor that executes computer-executable components stored in a non-transitory computer-readable memory, wherein the computer-executable components comprise:
an image component that captures, via at least one camera, at least one timeseries of images depicting an electrospray emitter of a chromatograph;
a volume component that executes a deep learning neural network on respective images of the at least one timeseries of images, wherein respective outputs of the deep learning neural network form a timeseries of volumes of a droplet that is depicted in the at least one timeseries of images as forming on the electrospray emitter; and
a leak component that determines a leak rate afflicting the chromatograph, based on the timeseries of volumes.

2. The system of claim 1, wherein the at least one timeseries of images includes at least one first image showing the droplet at a first timestep, wherein the timeseries of volumes includes a first volume of the droplet at the first timestep, wherein the deep learning neural network receives as input the at least one first image, wherein the at least one first image completes a forward pass through the deep learning neural network, and wherein the deep learning neural network produces as output the first volume based on the forward pass.

3. The system of claim 2, wherein the at least one camera includes a plurality of cameras that respectively view the electrospray emitter from a plurality of perspectives, such that the at least one first image includes a plurality of first images, each of which depicts the droplet at the first timestep from a respective one of the plurality of perspectives.

4. The system of any one of claims 2-3, wherein the deep learning neural network receives one or more auxiliary inputs along with the at least one first image, wherein the one or more auxiliary inputs include: a chemical composition of the droplet; a temperature of the droplet; an ambient temperature associated with the chromatograph; ambient humidity associated with the chromatograph; or an ambient pressure associated with the chromatograph.

5. The system of any one of claims 1-4, wherein the leak rate is based on an average slope exhibited by the timeseries of volumes.

6. The system of any one of claims 1-5, wherein the computer-executable components comprise:
an execution component that generates an electronic alert notification in response to the leak rate exceeding a threshold; or
an execution component that schedules a maintenance visit for the chromatograph in response to the leak rate exceeding a threshold.

7. A computer-implemented method, comprising:
capturing, by a device operatively coupled to a processor and via at least one camera, at least one timeseries of images depicting an electrospray emitter of a chromatograph;
executing, by the device, a deep learning neural network on respective images of the at least one timeseries of images, wherein respective outputs of the deep learning neural network form a timeseries of pixel counts occupied by a droplet that is depicted in the at least one timeseries of images as forming on the electrospray emitter; and
determining, by the device, a leak rate afflicting the chromatograph, based on the timeseries of pixel counts.

8. The computer-implemented method of claim 7, wherein the at least one timeseries of images includes at least one first image showing the droplet at a first timestep, wherein the timeseries of pixel counts includes a first pixel count occupied by the droplet at the first timestep, wherein the deep learning neural network receives as input the at least one first image, wherein the at least one first image completes a forward pass through the deep learning neural network, and wherein the deep learning neural network produces as output the first pixel count based on the forward pass.

9. The computer-implemented method of claim 8, wherein the at least one camera includes a plurality of cameras that respectively view the electrospray emitter from a plurality of perspectives, such that the at least one first image includes a plurality of first images, each of which depicts the droplet at the first timestep from a respective one of the plurality of perspectives.

10. The computer-implemented method of any one of claims 8-9, wherein the deep learning neural network receives one or more auxiliary inputs along with the at least one first image, wherein the one or more auxiliary inputs include: a chemical composition of the droplet; a temperature of the droplet; an ambient temperature associated with the chromatograph; ambient humidity associated with the chromatograph; or an ambient pressure associated with the chromatograph.

11. The computer-implemented method of any one of claims 7-10, further comprising:
converting, by the device, the timeseries of pixel counts into a timeseries of droplet volumes, by leveraging a pixel-to-volume conversion factor associated with the chromatograph, and wherein the leak rate is based on an average slope exhibited by the timeseries of droplet volumes.

12. The computer-implemented method of claim 11, wherein a constituent piece of hardware of the chromatograph or of a mass spectrometer to which the chromatograph is coupled is viewable by the at least one camera, wherein the constituent piece of hardware has a known physical size, and further comprising:
computing, by the device, the pixel-to-volume conversion factor based on the known physical size and based on how many pixels the at least one camera uses to depict the constituent piece of hardware.

13. The computer-implemented method of any one of claims 11-12, wherein a constituent piece of hardware of the chromatograph or of a mass spectrometer to which the chromatograph is coupled is viewable by the at least one camera and is coupled to an actuatable motor, and further comprising:
shifting, by the device and via the actuatable motor, the constituent piece of hardware by a known physical distance; and
computing, by the device, the pixel-to-volume conversion factor based on the known physical distance and based on an intra-image displacement of the constituent piece of hardware as depicted by the at least one camera.

14. The computer-implemented method of any one of claims 7-13, further comprising:
generating, by the device, an electronic alert notification in response to the leak rate exceeding a threshold; or
scheduling, by the device, a maintenance visit for the chromatograph in response to the leak rate exceeding a threshold.

15. A computer program product for facilitating non-disruptive and shape-unconstrained leak detection in liquid chromatography, the computer program product comprising a non-transitory computer-readable memory having program instructions embodied therewith, the program instructions executable by a processor to cause the processor to:
perform the computer-implemented method of any one of claims 7-14.
